# EUROPÄISCHE PATENTSCHRIFT

(11) **EP 3 782 794 B1**
(45) Veröffentlichungstag und Bekanntmachung des Hinweises auf die Patenterteilung: **12.07.2023**
(21) Anmeldenummer: 20189685.9
(22) Anmeldetag: 05.08.2020
(51) Int. Cl.: B29C 48/38, B29C 48/44, B29L 31/00, H01M 10/04, B29K 105/04

(54) **ANLAGE ZUR HERSTELLUNG EINER KUNSTSTOFFSCHMELZE UND VERWENDUNG EINER SOLCHEN ANLAGE ZUR HERSTELLUNG EINER KUNSTSTOFFSCHMELZE FÜR EINE PORÖSE FOLIE**
ASSEMBLY FOR PRODUCING A PLASTIC MELT AND USE OF SUCH AN ASSEMBLY FOR PRODUCING A PLASTIC MELT FOR A POROUS FILM
INSTALLATION DE FABRICATION D'UNE MATIÈRE PLASTIQUE FONDUE ET UTILISATION D'UNE TELLE INSTALLATION DE FABRICATION D'UNE MATIÈRE PLASTIQUE FONDUE POUR UNE FEUILLE POREUSE

(30) Priorität: 14.08.2019 DE 102019121854
(43) Veröffentlichungstag der Anmeldung: 24.02.2021
(73) Patentinhaber: Brückner Maschinenbau GmbH, 83313 Siegsdorf (DE)
(72) Erfinder: Sahrhage, Torsten, 83246 Unterwössen (DE); Marey, Benjamin, 83071 Stephanskirchen (DE); Seibel, Stefan, 83435 Bad Reichenhall (DE)
(74) Vertreter: Flach Bauer & Partner Patentanwälte mbB

(56) Entgegenhaltungen:
- EP-A1- 3 281 767
- EP-B1- 2 039 492
- EP-B2- 1 056 584
- DE-A1- 10 334 363
- DE-A1-102005 051 341
- DE-A1-102017 214 850
- DE-C1- 3 712 749

## Beschreibung

Die Erfindung betrifft eine Anlage zur Herstellung einer Kunststoffschmelze für poröse Folien, insbesondere in Form von Membranfolien und die Verwendung einer solchen Anlage zur Herstellung einer Kunststoffschmelze für eine solche poröse Folie, insbesondere in Form einer Membranfolie.

Zur Herstellung von gestreckten porösen Folien, wie Membranfolien für die Filtration, Entsalzung, aber auch als Separatorfolien/Barrierefolien für Akkumulatoren, wie Lithium-Ionen-Akkumulatoren, wobei die Folien aus Polymeren wie Polypropylen (PP), Polyethylen (PE) und pulverförmigen UHMWPE (Ultra High Molecular Weight PE) oder HMWPE (High Molecular Weight PE) oder HDPE (High Density PE) bestehen, und das Polymer zur Bildung der Poren vor dem Verstrecken mit einer Flüssigkomponente, insbesondere einem Plasticizer (wird nachfolgend auch als Lösemittel bzw. als Weichmacher bezeichnet und kann z.B. Paraffinöl, Hydrocarbons, Petroleum Hydrocarbons, White Mineral Oil beinhalten) homogen vermischt, erhitzt und plastifiziert werden muss. Der homogen eingearbeitete Plasticizer sorgt dabei dafür, dass sich in dem Polymer Freiräume bilden, die beim anschließenden Verstrecken und Auswaschen bzw. Verdampfen des Plasticizers zur Porenbildung führen. Ziel ist es dabei, den Plasticizer in einem Extruder derart homogen und fein im aufzuschmelzenden / aufgeschmolzenem Polymer zu verteilen, so dass beim Verstrecken und Auswaschen bzw. Ausdampfen des Plasticizers möglichst viele und feine Poren entstehen.

Standardgemäß werden hierzu gleichlaufende Doppelschneckenextruder verwendet, denen das Polymer mit der Flüssigkomponente, also dem Plasticizer in einer vorher homogen angerührten Suspension (Slurry) zugeführt werden. Die Komponenten werden dem Doppelschneckenextruder häufig auch aufgrund der vereinfachten Handhabung einzeln zugeführt. Bei einzelner Zugabe der Komponenten in den Extruder stellt eine homogene Vermischung hohe Ansprüche an die Mischqualität der Extruder. Homogene Mischergebnisse lassen sich in erster Linie durch lange Verweilzeiten, große Mischvolumina und hohe Drehzahlen erreichen. Da bei Drehzahlsteigerungen die Massetemperatur aufgrund der eingetragenen Friktionswärme schnell die aus Explosionsschutz geltende, maximal zulässige Massetemperatur (Abhängig von der Selbstentzündungstemperatur der Flüssigkomponente) erreicht und der Schmelze nur bedingt Wärme über den temperierten Zylindermantel abgeführt werden kann, sind nur beschränkte Drehzahlen möglich. Speziell bei Verwendung von UHMWPE mit einem hohen molekularen Gewicht oberhalb von ca. 600.000 g/mol verringert sich der Ausstoß weiter. Ist die Flüssigkomponente, also insbesondere der Plasticizer entzündlich, verschiebt sich aufgrund des Explosionsschutzes das Verarbeitungstemperaturfenster noch einmal nach unten, so dass die maximal mögliche Drehzahl noch einmal reduziert werden muss, welches aufgrund schlechterer Homogenisierleistungen zu einer Ausstoßreduzierung führt. Um im Markt geforderte Ausstöße zu erreichen, müssen Doppelschneckenextruder mit relativ großen Schneckendurchmessern und langen Verfahrenslängen von 50-70 L/D (L/D = Verhältnis der Schneckenlänge zum Schneckendurchmesser) eingesetzt werden.

Da die Marktanforderung bzgl. der verwendeten Rohstoffe, sowie der Ausstoßleistungen stetig steigen, die Maschinenkosten jedoch gering gehalten werden müssen, ist es die Aufgabe der Erfindung nach alternativen Extrusionskonzepten für die Produktion von porösen Folien bzw. Membranfolien (z.B. Batterieseparatorfolien (BSF)) zu suchen.

Aus der DE 37 12 749 C1 ist ein Verwendungszweck eines Sekundärextruders bekannt, welcher zum Herstellen von Schaumpolystyrolbahnen verwendet wird. Dabei wird eine kühlbare Zentralspindel verwendet, um die herum Planetspindeln angeordnet sind. Sowohl die Zentralspindel als auch die Planetspindeln umfassen eine Schrägverzahnung.

Aus der EP 2 039 492 B1 ist ein Verfahren zum Extrudieren mit einer Extrusions-Fördereinrichtung bekannt. Diese umfasst einen Extruder und eine Zahnradpumpe. Dadurch sollen eine Kautschukmischung bzw. ein thermoplastisches Elastomer vermischt werden können.

Aus der DE 10 2017 214 850 A1 ist ein Verfahren zur Herstellung von thermisch vernetztbaren Polymeren in einem Planetwalzenextruder bekannt. Der Planetwalzenextruder umfasst ein Füllteil und ein Compoundierteil. Hierzu gibt es mehrere Walzenzylinder, die Planetspindeln und eine Zentralspindel umfassen. Weiterhin ist eine Schmelzepumpe für den Produktaustrag vorgesehen.

Wie im Absatz 136 offenbart wird, werden insbesondere Membran-Folien in der offenbarten Anlage hergestellt. Die in DE102017214850A1 offenbarte Anlage entspricht grundsätzlich dem Oberbegriff des Anspruchs 1.

Aus der DE 103 34 363 A1 ist ein Verfahren zur Verarbeitung von hygroskopischem, granulatförmigem PET unter vorhergehender Trocknung bekannt. Das PET-Granulat wird in einem Planetwalzenextruder geknetet und einer Schmelzepumpe und anschließend einer Breitschlitzdüse zugeführt.

Aus der EP 1 056 584 B2 ist ein Verfahren zur Herstellung von Selbstklebemassen auf Basis von nicht-thermoplastischen Elastomeren bekannt. Hierzu wird ein Planetwalzenextruder verwendet. Am Ausgang des Planetwalzenextruders ist eine Schmelzepumpe vorgesehen.

Aus der DE 10 2005 051 341 A1 sind ein Verfahren und eine Vorrichtung zur PET-Aufbereitung bekannt. Zu Beginn wird der Extruder über ein Dosierwerk befüllt. Anschließend erfolgt das Aufschmelzen des PETs. Dies kann in einem Planetwalzenextruder geschehen.

Aus der EP 3 281 767 A1 ist eine Vorrichtung zur Herstellung einer Folie für einen elektrischen Energiespeicher bekannt. Dabei handelt es sich insbesondere um eine Mehrwellen-Schneckenmaschine mit einer entsprechenden Dosiereinrichtung. Weiterhin ist eine entsprechende Austragsdüse vorgesehen.

Die Aufgabe wird durch die Anlage zur Herstellung einer Kunststoffschmelze für eine poröse Folie, insbesondere einer Membranfolie gemäß dem Anspruch 1 gelöst. In dem Anspruch 12 ist noch eine Verwendung wiedergegeben. Die Ansprüche 2 bis 11 stellen vorteilhafte Weiterbildungen der erfindungsgemäßen Anlage dar.

Die erfindungsgemäße Anlage zur Herstellung einer Kunststoffschmelze für eine poröse Folie, insbesondere für eine Membranfolie, umfasst einen Planetwalzenextruder. Dieser dient zur Herstellung einer fließfähigen Kunststoffschmelze aus thermoplastischen Kunststoffen. Der Planetwalzenextruder weist dabei eine Befüllungsöffnung, zur Einfuhr der Ausgangsmaterialien und eine Ausstoßseite zur Abgabe der Kunststoffschmelze auf. Es ist weiterhin eine Schmelzepumpe vorgesehen. Diese ist notwendig, weil über Planetwalzenextruder nur bedingt hohe Massedrücke aufbaubar sind. Da in der Folien-Direktextrusion jedoch Schmelzeleitungen (Druckleitungen), Schmelzefilter und eine Breitschlitzdüse überfahren werden müssen, ist ein Massedruck von mehr als 40 bar, 50 bar, 60 bar, 70 bar oder mehr als 80 bar notwendig. Zum Druckaufbau wird daher direkt im Anschluss an den Planetwalzenextruder eine Schmelzepumpe angeschlossen. Dieser Anschluss erfolgt derart, dass die Ausstoßseite des Planetwalzenextruders mit einer nachgeordneten Einlassseite der Schmelzepumpe zur Weiterbeförderung der Kunststoffschmelze in Verbindung steht. Die Verbindung ist dabei gegenüber der Umgebungsatmosphäre als abgeschirmter Druckkanal oder als abgeschirmte Druckleitung ausgebildet. Der Einsatz eines abgeschirmten Druckkanals erlaubt, dass die Schmelzepumpe direkt an der Ausstoßseite des Planetwalzenextruders angebracht werden kann. Der Einsatz einer abgeschirmten Druckleitung erlaubt, dass der Planetwalzenextruder räumlich beabstandet von der Schmelzepumpe installiert werden kann. Der Planetwalzenextruder und die Schmelzepumpe sind dabei derart ausgebildet und/oder antreibbar, dass die Kunststoffschmelze unter Druck an der Einlassseite der Schmelzepumpe ansteht bzw. unter Druck übergebbar ist.

Es ist besonders vorteilhaft, dass herausgefunden werden konnte, dass zur Herstellung einer porösen Folie, insbesondere in Form einer Membranfolie, Planetwalzenextruder besonders gute Ergebnisse liefern. Im Kunststoffbereich wurden diese bisher lediglich zur Verarbeitung von PVC verwendet. So umfasst der Planetwalzenextruder eine, verglichen zu anderen Extrudern, sehr große Oberfläche, über welche die Kunststoffschmelze geknetet werden kann. Auch die Übergabe der Kunststoffschmelze unter Druck an die Schmelzepumpe ist besonders vorteilhaft, weil ein undefiniertes Entgasen, bzw. Verdampfen einer eingesetzten Flüssigkomponente, also insbesondere des Plasticizers (Weichmachers) für diese poröse Folie so verhindert werden kann. Gleichzeitig wird durch den hohen Druck erreicht, dass sich die Kunststoffschmelze optimal durchmischt und gleichzeitig Luft aus dieser herausgedrückt wird. Die Schmelzepumpe dient außerdem zum Massedruckaufbau (wie nachfolgend noch erläutert wird) und daneben zum Glätten von Massedruckschwankungen. Insgesamt kann durch Einsatz eines Planetwalzenextruders eine besonders homogene Kunststoffschmelze bei einer relativ kompakt gehaltenen Anlage erreicht werden. Der Einsatz eines solchen Planetwalzenextruders erlaubt außerdem, dass die Flüssigkomponente, also insbesondere der Plasticizer, homogen in das Polymer einmischbar ist und dass die Flüssigkomponente, also insbesondere der Plasticizer, direkt in oder in der Nähe des Extruders eingespritzt werden kann. Weiterhin ist ein solcher Planetwalzenextruder modular aufbaubar und erlaubt eine schonende Materialaufbereitung bei hoher Mischleistung. Ergänzend kann eine kontrollierte Massetemperaturführung bis zum Austrag hin erreicht werden. Die abgeschirmte Druckleitung ist vorzugsweise kürzer als 500 cm, 400 cm, 300 cm, 200 cm, 100 cm, 50 cm, 40 cm, 30 cm, 20 cm oder kürzer als 10 cm. Die abgeschirmte Druckleitung ist vorzugsweise länger als 5 cm, 15 cm, 25 cm, 35 cm, 45 cm, 150 cm, 250 cm, 350 cm oder länger als 450 cm.

Erfindungsgemäß ist weiterhin, dass der Druck unter dem die Kunststoffschmelze an der Einlassseite der Schmelzepumpe ansteht bzw. an die Einlassseite der Schmelzepumpe übergebbar ist größer ist als 4 bar, 5 bar, 6 bar, 7 bar, 8 bar, 9 bar, 10 bar, 11 bar, 13 bar, 15 bar, 17 bar oder größer ist als 19 bar aber vorzugweise kleiner ist als 21 bar, 18 bar, 16 bar, 14 bar oder 12 bar. Dadurch wird erreicht, dass die Kunststoffschmelze optimal durchmischt wird und dass Luft, welche im Schüttgut enthalten ist (z. B. im pulverförmigen Polymer bzw. zwischen den Pulverpartikeln) aus der Kunststoffschmelze heraus gedrückt werden kann. Dieser Druck verhindert außerdem, dass die Flüssigkomponente entweicht und späteren Prozessstufen nicht oder nicht mehr in ausreichender Konzentration zur Verfügung steht. Grundsätzlich könnte das Zugeben des Schüttguts unter einer Stickstoffatmosphäre erfolgen, um den Sauerstoff-Anteil gering zu halten. So könnte eine Oxidation der Kunststoffschmelze mit einem einhergehenden Materialabbau, aber auch eine mögliche Explosion der Flüssigkomponente verhindert werden.

Erfindungsgemäß kann der Druck unter dem die Kunststoffschmelze an der Einlassseite der Schmelzepumpe ansteht bzw. an diese übergehbar ist dadurch erhöht werden, indem die Schmelzepumpe dazu ausgebildet ist, ihre Pumpendrehzahl zu verringern. Eine solche verringerte Pumpendrehzahl bewirkt, dass sich die Kunststoffschmelze von der Einlassseite der Schmelzepumpe in Richtung der Ausstoßseite des Planetwalzenextruders (und in diesem hinein) zurückstaut, wobei diesem Rückstau der kontinuierliche Materialfluss der weiteren Kunststoffschmelze entgegenwirkt (Zugabe der Ausgangskomponenten (Polymer und Flüssigkomponente) wird vorzugsweise nicht reduziert), sodass es zu einer Erhöhung des Drucks kommt. Der Massedruck zwischen dem Planetwalzenextruder und der Schmelzepumpe wird daher insbesondere über das Verhältnis zwischen der Zugabe der Ausgangskomponenten (Dosierung des Polymers und der Flüssigkomponente) und der Drehzahl der Schmelzepumpe eingestellt. Je langsamer die Schmelzepumpe bei konstanter Zugabe der Ausgangskomponenten und insbesondere bei konstanter Drehzahl des Planetwalzenextruders dreht, desto weiter wird die Masse in Richtung des Planetwalzenextruders zurückgestaut. Dieser kontinuierliche Massestrom im Planetwalzenextruder wirkt dabei, wie bereits erläutert, dem Materialrückstau entgegen, wodurch es zum Druckaufbau kommt. Grundsätzlich wird der Druck an der Ausstoßseite des Planetwalzenextruders (an dem Extruderkopf) sukzessive erhöht, bis keine Luft mehr in der Kunststoffschmelze sichtbar ist. Dies gelingt insbesondere bei einem Massedruck von mehr als 5 bis 10 bar.

Diese Luft wird erfindungsgemäß ausschließlich rückwärts entgast. Dies gelingt dadurch, dass ein Bereich, beginnend von der Befüllungsöffnung des Planetwalzenextruders hin zur Einlassseite der Schmelzepumpe frei von etwaigen Luftöffnungen ist, sodass die in der Kunststoffschmelze mitgeschleppte Luft beim Druckaufbau der Kunststoffschmelze aus dieser verdrängt und in Richtung der Befüllungsöffnung zurückgedrängt und erst aus der Befüllungsöffnung entgast wird. Es wird hier auch von einer Rückwärtsentgasung gesprochen. Dies bewirkt außerdem den Vorteil, dass nur diese eine Stelle (insbesondere bei Einsatz von entzündlichen Flüssigkomponenten) besonders gesichert sein muss.

Vorzugsweise ist eine Absaugvorrichtung im Bereich der Befüllungsöffnung angebracht, die Gase bzw. austretende Luft aus der Befüllungsöffnung absaugt und vorzugsweise einer Filteranordnung zuführt.

Eine weitere besondere Ausführungsform der Anlage liegt außerdem vor, wenn die Befüllungsöffnung als "gemeinsame" Befüllungsöffnung ausgebildet ist, in die sowohl ein Polymer, insbesondere ein pulverförmiges Polymer, und Füllstoffe insbesondere in Form von Flüssigkomponenten, wie Weichmacher, also beispielsweise flüssige Kohlenwasserstoffe wie z.B. Paraffinöl oder auch flüssige Lösungsmittel gemeinsam eingefüllt werden können. Aufgrund der gleichzeitigen Zugabe von Polymer und Flüssigkomponente in den Planetwalzenextruder ist eine gute Homogenisierung bei moderater Massetemperatur gewährleistet. Die Zugabe sollte vorzugsweise unter einer Stickstoffatmosphäre erfolgen. Die Zugabe der Flüssigkomponente kann (zusätzlich auch noch) an anderen Stellen des Planetwalzenextruders erfolgen.

In einer bevorzugten Ausführungsform der Anlage ist eine Antriebsvorrichtung zum Antreiben des Planetwalzenextruders vorgesehen (z.B. Elektromotor). Der Planetwalzenextruder umfasst dabei n-Walzenzylinder mit n ≥ 1, 2, 3, 4, 5, 6, 7 oder n ≥ 8. Ein solcher Walzenzylinder umfasst dabei insbesondere einen innenverzahnten Außenmantel (innenverzahnte Zylinderhülse), welcher insbesondere einen großen Außendurchmesser aufweist. Dazwischen sind verzahnte Planetspindeln angeordnet. Die verzahnten Planetspindeln werden über eine Zentralspindel, die ebenfalls verzahnt ist, angetrieben. Die Zentralspindel ist im Zentrum der innenverzahnten Zylinderhülse angeordnet. Zwischen der Zylinderhülse und der Zentralspindel sind die Planetspindeln angeordnet. Gute Ergebnisse werden mit mindestens drei und je nach Anlagentyp mit bis zu 18 Planetspindeln pro Walzenzylinder erreicht. Einerseits kämmen sich die Zentralspindel und die Planetspindeln und andererseits kämmen sich die Planetspindeln mit der innenverzahnten Zylinderhülse.

Über die angetriebene Zentralspindel laufen die Planetspindeln zwischen der innenverzahnten Zylinderhülse und der Zentralspindel planetenartig um und walzen dabei die Kunststoffschmelze (Polymerschmelze) in dünne Schichten aus. Die dadurch entstehende große Oberfläche des ausgewalzten Polymers, also der ausgewalzten Kunststoffschmelze, ermöglicht sowohl einen kontrollierten Energieeintrag als auch eine kontrollierte Energieabfuhr. Die Zentralspindel durchsetzt dabei mehrere Walzenzylinder, insbesondere alle Walzenzylinder. Die Zentralspindel ist insbesondere einteilig aufgebaut, könnte allerdings auch aus mehreren Teilen bestehen, die drehfest miteinander verbunden (z.B. miteinander verschraubt, ineinander gesteckt und/oder verschweißt) sind. Der erste Walzenzylinder umfasst vorzugsweise die Befüllungsöffnung und der letzte Walzenzylinder die Ausstoßseite. Bevorzugt umfasst der Planetwalzenextruder vier oder mehr als vier, sechs, oder acht bzw. mehr als acht Walzenzylinder. Die einzelnen Walzenzylinder werden vorzugsweise miteinander verschraubt, wodurch ein modularer Aufbau des Planetwalzenextruders erreicht wird.

Je mehr Walzenzylinder vorgesehen sind, desto höher ist der spezifische Ausstoß bei homogener Schmelze. Ein besonders gutes Ergebnis wird mit sechs bis acht oder mehr als acht Walzenzylindern erreicht, weil eine höhere Anzahl an Walzenzylindern in einen längeren Planetwalzenextruder resultieren, wodurch die Verweil- und Mischzeit ebenfalls verlängert ist. Die Kunststoffschmelze ist in diesem Fall sehr homogen. Gleichzeitig ist ein Temperaturprofil über die einzelnen Walzenzylinder individueller einstellbar (z.B. wärmer an der Befüllungsöffnung und kälter an der Ausstoßseite). Dies wird nachfolgend noch genauer erläutert.

Die Innenverzahnung der Zylinderhülse, die Verzahnung der Zentralspindel und die Verzahnung der Planetspindeln ist vorzugsweise eine 45° Schrägverzahnung
(= Drallverzahnung). Dadurch entsteht eine Vorwärtsströmung der ausgewalzten Kunststoffschmelze.

Die Planetspindeln können auch genoppt sein, was bedeutet, dass die 45° Schrägverzahnung ab und zu entlang der Längsachse bzw. in regelmäßigen Abständen entlang der Längsachse der Planetspindeln unterbrochen ist. Selbiges gilt vorzugsweise ebenfalls für die Zentralspindel, die insbesondere am Übergang von einem Walzenzylinder zum anderen Walzenzylinder ebenfalls unterbrochen ist. Durch eine solch unterbrochene Schrägverzahnung (Drallverzahnung) kommt es zu einer sehr guten Querdurchmischung aufgrund vieler einzelner Massestromaufteilungen.

Die Länge jeder Planetspindel entspricht vorzugsweise in etwa der Länge eines Walzenzylinders. Insbesondere sind die Planetspindeln innerhalb der meisten Walzenzylinder ausschließlich innerhalb des jeweiligen Walzenzylinders angeordnet und erstrecken sich nicht über diesen Walzenzylinder hinaus in benachbarte Walzenzylinder hinein. Dennoch kann insbesondere für die ersten beiden benachbarten Walzenzylinder gelten, dass diese auch durchgehende Planetspindeln umfassen. Derartige Planetspindeln sind länger als der jeweilige Walzenzylinder. Sie erstrecken sich daher sowohl im ersten als auch im zweiten Walzenzylinder, sind also in beiden Walzenzylindern gemeinsam angeordnet. In diesem Fall ist vorzugsweise zwischen den beiden ersten benachbarten Walzenzylindern ein verzahnter Zwischenring eingesetzt, der die Innenverzahnung der Zylinderhülse abbildet. Er wirkt dabei als Verbindungsstück zwischen zwei Walzenzylindern, wodurch besonders einfach durchgehende Planetspindeln eingesetzt werden können.

In einem weiteren bevorzugten Ausführungsbeispiel wird zwischen zwei benachbarten Walzenzylindern ein Dispergierring eingesetzt. Dies gilt insbesondere ab dem zweiten bis zum n-ten Walzenzylinder (zwischen dem ersten und dem zweiten Walzenzylinder ist vorzugsweise der verzahnte Zwischenring eingesetzt). Die Dispergierringe unterscheiden sich vorzugsweise bezüglich des Maßes ihres Ringspalts voneinander. Zwischen dem zweiten und dem dritten Walzenzylinder ist ein Dispergierring mit einem größeren Ringspalt eingesetzt als in den weiteren, in Richtung der Ausstoßseite angeordneten Dispergierringen. Der Dispergierring zwischen dem zweiten und dem dritten Walzenzylinder umfasst vorzugsweise einen Ringspalt, der größer ist als 1 mm, 1,2 mm, 1,4 mm, 1,7 mm oder 1,9 mm und der vorzugsweise kleiner ist als 2,1 mm, 1,8 mm oder 1,6 mm. Die sich daran anschließenden Dispergierringe haben vorzugsweise einen Ringspalt der größer ist als 0,7 mm, 0,8 mm, 0,9 mm, 1 mm, 1,1 mm oder 1,2 mm und der vorzugsweise kleiner ist als 1,3 mm oder 1,1 mm. Der Dispergierring zwischen dem zweiten und dem dritten Walzenzylinder hat deshalb einen größeren Ringspalt, weil hier noch zusätzliche Inhomogenitäten auftreten können, welche bei einem zu kleinen Ringspalt zum Verblocken des Übergangs zwischen zwei Walzenzylindern führen könnten. Im weiteren Verlauf des Planetwalzenextruders ist die Kunststoffschmelze weitestgehend homogen, wodurch die Gefahr des Verblockens reduziert wird und kleinere Ringspalte eingesetzt werden können.

In einer besonderen Ausführungsform der erfindungsgemäßen Anlage ist noch eine Dosieranordnung vorgesehen. Diese Dosieranordnung umfasst mindestens ein (z.B. gravimetrisches) Dosierwerk für mindestens ein Polymer und eine Dosierpumpe, sowie zumindest eine Einspritzanordnung für die Flüssigkomponente. Die Dosieranordnung ist dazu ausgebildet, das dosierte Polymer und die dosierte Flüssigkomponente direkt über die Befüllungsöffnung in den ersten Walzenzylinder auszugeben, wo das Polymer und die Flüssigkomponente miteinander vermischt werden. Alternativ dazu ist die Dosieranordnung dazu ausgebildet, das dosierte Polymer und die dosierte Flüssigkomponente in eine Seitenbeschickung (engl. side feeder) mit einer oder zwei Förderschnecken zu geben, in welcher eine Vermischung des Polymers und der Flüssigkomponente stattfindet, wobei die Förderschnecke(n) die Mischung dann über die Befüllungsöffnung in den ersten Walzenzylinder ausgibt bzw. ausgeben. Als Dosierpumpe kann beispielsweise eine Membranpumpe bzw. eine Zahnradpumpe verwendet werden. Durch die gleichzeitige Zugabe von Polymer und Flüssigkomponente ist eine sehr gute Homogenisierung bei moderater Massetemperatur gewährleistet. Das Polymer liegt insbesondere als Pulver vor. Eine derartige Dosierung des pulverförmigen Polymers mit der Flüssigkomponente, insbesondere in Form des Plasticizers, in eine gemeinsame Seitenbeschickung wurde bisher ebenfalls noch nicht realisiert.

In einer weiteren Ausführungsform umfasst die Dosieranordnung noch eine oder mehrere weitere Einspritzanordnungen. Diese eine oder diese mehreren weiteren Einspritzanordnungen sind entlang des Planetwalzenextruders angeordnet. Insbesondere sind sie jeweils am Übergangsbereich zwischen einem Walzenzylinder zu seinem benachbarten Walzenzylinder angeordnet. Über diese eine oder diese weiteren Einspritzanordnungen können in den Planetwalzenextruder bzw. in diesen Übergangsbereich des Planetwalzenextruders eine zusätzliche genau dosierte Menge der gleichen oder einer weiteren Flüssigkomponente eingespritzt werden.

Bevorzugt ist die Dosieranordnung dazu ausgebildet, das Verhältnis der dem Planentenwalzenextruder (3) zugeführten Menge an Polymer und Flüssigkomponente derart einzustellen, dass:
a) auf 20 bis 50 Gewichtsteile des Polymers 80 bis 50 Gewichtsteile der Flüssigkomponente hinzufügbar sind; oder
b) auf 25 bis 45 Gewichtsteile des Polymers 75 bis 55 Gewichtsteile der Flüssigkomponente hinzufügbar sind; oder
c) auf 30 bis 40 Gewichtsteile des Polymers 70 bis 60 Gewichtsteile der Flüssigkomponente hinzufügbar sind.

In einer weiteren bevorzugten Ausführungsform umfasst die Anlage noch zumindest einen Drucksensor, der am n-ten Walzenzylinder oder zwischen dem n-ten Walzenzylinder und der Einlassseite der Schmelzepumpe angeordnet ist und dazu dient, einen Druck der Kunststoffschmelze zu messen. Weiterhin ist eine Steuereinrichtung vorgesehen, die diesen Messwert entgegennimmt und auswertet und daher dazu ausgebildet ist, die Dosieranordnung bezüglich ihrer Ausgabemenge, die Antriebsvorrichtung bezüglich der Drehzahl der Zentralspindel und die Schmelzepumpe bezüglich der Pumpendrehzahl derart anzusteuern, dass der gemessene Druck durch den zumindest einen Drucksensor einen vorbestimmten Referenzwert erreicht. Ist der Druck zu niedrig, dann kann beispielsweise die Drehzahl der Schmelzepumpe verlangsamt werden. Alternativ oder ergänzend kann auch mehr Material durch die Dosieranordnung hinzugefügt werden. Ist der Druck zu hoch, dann kann die Drehzahl der Schmelzepumpe erhöht werden, bzw. weniger Ausgangsmaterial durch die Dosieranordnung der Befüllungsöffnung hinzugefügt werden. Wie erläutert, sollen Lufteinschlüsse in der Kunststoffschmelze vermieden werden. Hierzu muss der Massedruck an der Ausstoßseite des Planetwalzenextruders und an der Einlassseite der Schmelzepumpe vorzugsweise mindestens 5-10 bar betragen. Zusätzlich kann auch die Drehzahl des Planetwalzenextruders bei gleichbleibendem Ausstoß reduziert werden, um einen höheren spezifischen Ausstoß [kg/h/rpm] und damit einen höheren Füllgrad im Verfahrensteil zu erreichen. Durch einen höheren Füllgrad im Planetwalzenextruder erhöht sich der Massedruck im Planetwalzenextruder, was zu einer frühzeitigen Rückwärtsentgasung der Luft beiträgt.

Durch den Einsatz des Planetwalzenextruders ergibt sich eine große Oberfläche der ausgewalzten Kunststoffschmelze. Dies erlaubt dabei den kontrollierten Energieeintrag bzw. die kontrollierte Energieabfuhr über thermische Aufheizung/Abkühlung. In einer besonderen Ausführungsform der erfindungsgemäßen Anlage ist die Zentralspindel dabei vollständig oder entlang ihrer überwiegenden Länge von zumindest einem Fluidkanal durchsetzt (vorzugsweise sind zwei (parallele) Fluidkanäle vorgesehen, die jeweils in entgegengesetzter Richtung von dem Fluid durchflossen werden, also einen Hin- und einen Rückkanal). Es sind weiterhin eine Pumpenanordnung und eine Heiz- und/oder Kühlanordnung vorgesehen, die dazu ausgebildet sind, um das Fluid (z.B. (Thermal)Öl oder Wasser) auf eine bestimmte Temperatur zu temperieren und durch den zumindest einen Fluidkanal zu leiten, um dadurch die Kunststoffschmelze über die Zentralspindel auf eine bestimmte Temperatur zu temperieren.

Neben oder alternativ zu der Zentralspindel können vorzugsweise auch die Walzenzylinder (insbesondere individuell) temperiert werden. Die Walzenzylinder umfassen zumindest jeweils einen Temperierungskanal. Es sind eine Pumpenanordnung und eine Temperieranordnung vorgesehen und dazu ausgebildet, um ein Fluid (z.B. (Thermal)-Öl oder Wasser) auf eine bestimmte Temperatur zu temperieren und durch den zumindest einen Temperierungskanal des jeweiligen Walzenzylinders zu leiten, um dadurch die Kunststoffschmelze über die Walzenzylinder auf eine bestimmte Temperatur zu temperieren. Der zumindest jeweils eine Temperierungskanal jedes Walzenzylinders ist von den Temperierungskanälen der jeweils anderen Walzenzylindern getrennt, wodurch die Temperierungskanäle der einzelnen Walzenzylinder unterschiedlich temperierbar sind, wobei die Temperatur eines Fluids im ersten Walzenzylinder wärmer sein kann als die Temperatur eines Fluids im n-ten Walzenzylinder. Unter dem Wortlaut "temperieren" kann hier verstanden werden, dass die Kunststoffschmelze sowohl aufgeheizt als auch abgekühlt (das Fluid ist kälter als die Kunststoffschmelze) wird.

In einem weiteren optionalen Ausführungsbeispiel kann auch die Schmelzepumpe elektrisch oder mit Thermalöl temperierbar (beheizbar oder kühlbar) sein. Die Temperatur wird grundsätzlich von Temperatursensoren erfasst und an die Steuereinrichtung übermittelt. Die Steuereinrichtung erfasst vorzugsweise sämtliche Prozessparameter (Temperatur, Druck) an verschiedenen Stellen der Anlage und erzeugt entsprechende Stellgrößen, die an die Antriebseinrichtung für die Zentralspindel bzw. an die Antriebseinrichtung für die Schmelzepumpe bzw. an die Dosieranordnung ausgegeben werden. Bei Überschreiten einer maximal zulässigen Massetemperatur wird vorzugsweise eine Abschaltung (Ex-Schutz) ausgelöst. Über den gemessenen Druck werden dagegen die Drehzahl des Planetwalzenextruders und der Ausstoß der Schmelzepumpe geregelt.

Weiterhin wird auch noch eine Verwendung angegeben. So kann die Anlage zur Herstellung einer Kunststoffschmelze für eine poröse Folie, insbesondere eine Membranfolie verwendet werden, wobei in diesem Fall der Befüllungsöffnung ein Polymer und gleichzeitig eine Flüssigkomponente, insbesondere ein Plasticizer (Weichmacher), zugeführt werden. Wie bereits erläutert, sind in der Vergangenheit keine Planetwalzenextruder für die Herstellung einer porösen Folie verwendet worden.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figur 1:: eine Übersicht über ein erstes Ausführungsbeispiel einer Anlage zur Herstellung einer Kunststoffschmelze für eine poröse Folie, insbesondere Membranfolie;
- Figur 2:: eine Übersicht über ein zweites detaillierteres Ausführungsbeispiel einer Anlage zur Herstellung einer Kunststoffschmelze für eine poröse Folie, bzw. Membranfolie;
- Figur 3:: eine räumliche Ansicht eines teilweise geöffneten Walzenzylinders eines Planetwalzenextruders; und
- Figur 4:: eine räumliche Ansicht eines Querschnitts durch einen Walzenzylinder eines Planetwalzenextruders.

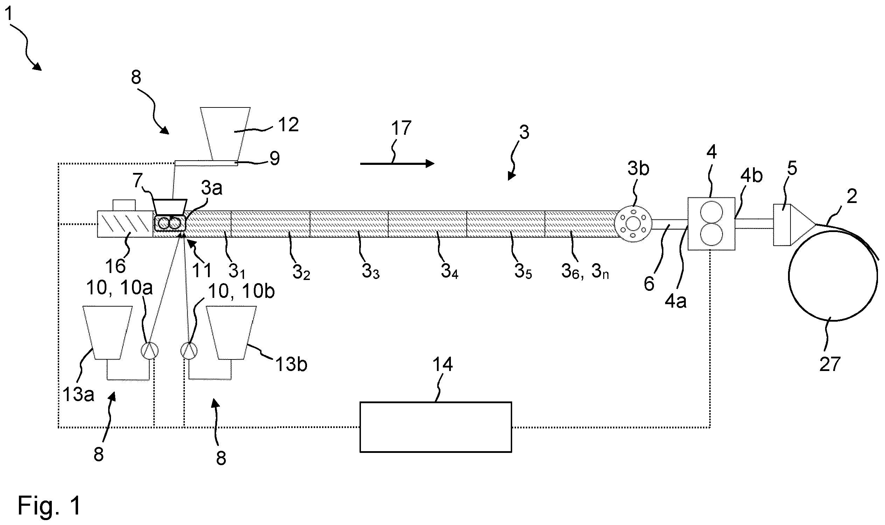

Figur 1 zeigt eine Anlage 1 zur Herstellung einer Kunststoffschmelze 2 für eine poröse Folie, bzw. Membranfolie. Sie umfasst einen Planetwalzenextruder 3, der eine Befüllungsöffnung 3a und eine Ausstoßseite 3b aufweist. Bei der Befüllungsöffnung 3a handelt es sich insbesondere um eine seitliche Befüllungsöffnung 3a. Es sind weiterhin eine Schmelzepumpe 4 und eine Breitschlitzdüse 5 vorgesehen. Die Ausstoßseite 3b des Planetwalzenextruders 3 steht dabei mit einer nachgeordneten Einlassseite 4a der Schmelzepumpe 4 zur Weiterbeförderung der Kunststoffschmelze 2 in Verbindung. Die Verbindung ist in diesem Fall als gegenüber der Umgebungsatmosphäre abgeschirmte Druckleitung 6 ausgebildet. Der Planetwalzenextruder 3 und die Schmelzepumpe 4 sind so ausgebildet und/oder antreibbar, dass die Kunststoffschmelze 2 unter Druck an der Einlassseite 4a der Schmelzepumpe 4 ansteht bzw. an die Einlassseite 4a unter Druck übergebbar ist. Die Breitschlitzdüse 5 ist mit einer Auslassseite 4b der Schmelzepumpe 4 verbunden. Nicht dargestellt ist, dass zwischen der Auslassseite 4b der Schmelzepumpe 4 und der Breitschlitzdüse 5 optional noch ein Spülventil und/oder ein Schmelzefilter angeordnet sein können. Die Schmelzepumpe 4 und/oder die Druckleitung 6 und/oder das Spülventil und/oder der Schmelzefilter ist elektrisch temperierbar, insbesondere elektrisch beheizbar, so dass die Kunststoffschmelze 2 immer innerhalb des Verarbeitungs-Temperaturfensters liegt und damit u.a. die entsprechende Viskosität aufweist. Das Temperieren könnte auch durch Thermalöl erfolgen. Insbesondere liegt die Viskosität, der an der Breitschlitzdüse 5 austretenden Kunststoffschmelze 2 im Bereich von 1000 bis 4000 Pa*s. Die Breitschlitzdüse 5 hat insbesondere eine Schlitzbreite von mehr als 300 mm, 400 mm, 500 mm, 600 mm, 700 mm, 800 mm, 1000 mm, 1200 mm, 1400 mm, 1600 mm, 1800 mm, 2000 mm, 2200 mm, 2400 mm, 2600 mm, 2800 mm oder mehr als 3000 mm aber vorzugsweise von weniger als 3100 mm, 2900 mm, 2700 mm, 2500 mm, 2300 mm, 2100 mm, 1900 mm, 1700 mm, 1500 mm, 1300 mm, 1100 mm, 900 mm, oder von weniger als 650 mm. Die Breitschlitzdüse 5 hat eine Schlitzhöhe von mehr als 0,1 mm, 0,3 mm, 0,5 mm, 0,7 mm, 0,9 mm, 1,1 mm, 1,3 mm, 1,5 mm, 1,7 mm, 1,9 mm, 2,1 mm, 2,3 mm, 2,5 mm, 2,7 mm, 2,9 mm oder von mehr als 3,1 mm, aber von vorzugsweise weniger als 3,2 mm, 3,0 mm, 2,8 mm, 2,6 mm, 2,4 mm, 2,2 mm, 2,1 mm, 2,0 mm, 1,8 mm, 1,6 mm, 1,4 mm, 1,2 mm, 1,0 mm, 0,8 mm, 0,6 mm, 0,4 mm oder von weniger als 0,2 mm.

Die Kunststoffschmelze 2 wird von der Breitschlitzdüse 5 auf eine Kühlwalze 27 ausgegeben, die auf eine bestimmte Temperatur (geregelt) temperiert ist und ggf. teilweise in einem nicht dargestellten Wasserbad angeordnet ist. Eine nicht dargestellte Motoreinrichtung ist dazu ausgebildet, um die Kühlwalze 27 zu drehen.

Der Druck, unter dem die Kunststoffschmelze 2 an der Einlassseite 4a der Schmelzepumpe 4 ansteht bzw. an diese übergebbar ist, ist vorzugsweise größer als 5 bis 10 bar.

Der Druck kann erhöht werden, indem die Schmelzepumpe 4 ihre Pumpendrehzahl verringert. Bei weiterhin konstantem Materialfluss durch den Planetwalzenextruder 3 bewirkt die Verringerung der Pumpendrehzahl, dass sich von der Einlassseite 4a der Schmelzepumpe 4 in Richtung der Ausstoßseite 3b des Planetwalzenextruders 3 die Kunststoffschmelze 2 zurückstaut. Diesem Rückstau wirkt der weiterhin kontinuierliche Materialfluss der weiteren Kunststoffschmelze 2 entgegen, so dass es im Bereich der Ausstoßseite 3b des Planetwalzenextruders 3 zu einer Erhöhung des Drucks kommt. Der Rückstau der Kunststoffschmelze 2 erstreckt sich vorzugsweise auf weniger als 50%, 40%, 30%, 20% oder weniger als 10% der Länge des Planetwalzenextruders 3.

Alternativ oder Ergänzend wäre es hier auch möglich, dass zusätzliches Ausgangsmaterial der Befüllungsöffnung 3a hinzugefügt wird.

Besonders bedeutsam ist, dass der Bereich beginnend von der Befüllungsöffnung 3a des Planetwalzenextruders 3 hin zu der Einlassseite 4a der Schmelzepumpe 4 frei von Luftöffnungen ist. Dies wird, wie bereits erläutert, durch die abgeschirmte Druckleitung 6 oder allgemein durch einen abgeschirmten Drucckanal (nicht dargestellt) realisiert. Dies bewirkt, dass die in der Kunststoffschmelze 2 mitgeschleppte Luft beim Druckaufbau (bevorzugt mehr als 5-10 bar) der Kunststoffschmelze 2 aus dieser verdrängt und mangels anderweitiger Öffnungen in Richtung der Befüllungsöffnung 3a zurückgedrückt und erst aus dieser Befüllungsöffnung entgast wird. Diese fehlenden Luftöffnungen bewirken außerdem, dass Komponenten bzw. Füllstoffe innerhalb der Kunststoffschmelze 2, wie beispielsweise die Flüssigkomponente, insbesondere der Plasticizer (Weichmacher), weiterhin in der Kunststoffschmelze 2 verbleiben und nachfolgenden Prozessen zur Verfügung stehen. Bei diesen Füllstoffen kommt es gerade nicht zu einer unkontrollierten Entgasung, was besonders dann kritisch wäre, wenn diese leicht entzündlich wären.

Besonders vorteilhaft ist außerdem, dass die Befüllungsöffnung 3a in Figur 1 als gemeinsame Befüllungsöffnung 3a für ein Polymer, insbesondere für ein pulverförmiges Polymer und für Füllstoffe, insbesondere in Form von Flüssigkomponenten, wie flüssige Kohlenwasserstoffe bzw. Plasticizer (Weichmacher) ausgebildet ist. Die Flüssigkomponente kann auch als Lösemittel ausgebildet sein.

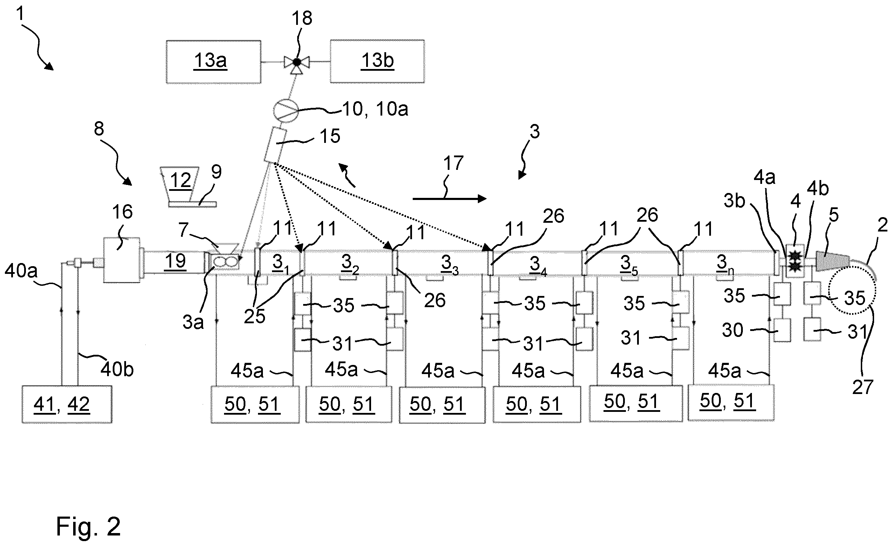

Besonders vorteilhafte Ergebnisse haben sich nach umfangreichen Untersuchungen dann erzielen lassen, wenn das Polymer und die Flüssigkomponente gemeinsam in dem Planetwalzenextruder 3 bzw. in eine entsprechende Seitenbeschickung 7 (s. Figur 2) gegeben werden. Dies gelingt durch eine Dosieranordnung 8. Diese umfasst insbesondere zumindest ein gravimetrisches Dosierwerk 9 für zumindest ein (z.B. pulverförmiges) Polymer ggf. Verarbeitungshilfen wie z.B. Antioxidantien und eine Dosierpumpenanordnung 10 mit zumindest einer Dosierpumpe 10a, 10b und zumindest einer Einspritzanordnung 11. Das zumindest eine Dosierwerk 9 soll möglichst nahe an der Befüllungsöffnung 3a bzw. der Seitenbeschickung 7 angeordnet sein (Abstand sollte kleiner sein, als 100 cm, 80 cm, 60 cm, 40 cm, 30 cm, 20 cm oder 10 cm), weil dadurch die statische Aufladung des pulverförmigen Polymers gering gehalten wird.

Die Dosieranordnung 8 ist dazu ausgebildet, das Polymer und die Flüssigkomponente zu dosieren und entweder direkt über die Befüllungsöffnung 3a in den Planetwalzenextruder 3 auszugeben, wo das Polymer und die Flüssigkomponente miteinander vermischt werden (in Figur 1 dargestellt) oder diese in eine Seitenbeschickung 7 zu geben, die wiederum eine oder zwei Förderschnecke(n) aufweist, in welcher eine Vermischung des Polymers und der Flüssigkomponente stattfindet, wobei die Förderschnecke(n) diese Mischung dann über die Befüllungsöffnung 3a in den Planetwalzenextruder 3 ausgibt. Eine homogene Vermischung findet hier noch nicht statt. In der Förderschnecke oder den Förderschnecken der Seitenbeschickung 7 kommt es zur Benetzung des Polymers mit der Flüssigkomponente. Das mit der Flüssigkomponente benetzte Polymer wird dem Planetwalzenextruder 3 zugeführt. Im Planetwalzenextruder 3 werden dann die Anteile der Flüssigkomponente eingemischt, die Polymeranteile aufgeschmolzen, sowie die Schmelze homogenisiert.

Das zumindest eine gravimetrische Dosierwerk 9 ist an einem Polymer-Vorratsbehälter 12 angeschlossen, der mit vorzugsweise pulverförmigem Polymer gefüllt ist.

In Figur 1 ist neben der zumindest einen ersten Dosierpumpe 10a der Dosierpumpenanordnung auch noch eine weitere Dosierpumpe 10b dargestellt, die ebenfalls Bestandteil der Dosierpumpenanordnung 10 sein kann. Dargestellt ist ebenfalls ein erster Vorratsbehälter 13a und ein zweiter Vorratsbehälter 13b für eine erste und eine zweite Flüssigkomponente. Die erste Dosierpumpe 10a ist dabei an dem ersten Vorratsbehälter 13a angeschlossen. Die zweite Dosierpumpe 10b ist wiederum an dem zweiten Vorratsbehälter 13b angeschlossen. Eine Steuereinrichtung 14 steuert die Dosieranordnung 8 und gibt so das Mischverhältnis zwischen Polymer und Flüssigkomponente vor. Bei der Dosierpumpe 10a, 10b handelt es sich vorzugsweise um eine Kolbenmembranpumpe oder eine Zahnradpumpe. Vor oder nach der jeweiligen Dosierpumpe 10a, 10b kann optional noch ein Durchflussmesser 15 (s. Figur 2), insbesondere in Form eines Coriolis-Durchflussmessers 15 angeschlossen sein. Dieser wäre wiederum mit der Steuereinrichtung 14 verbunden.

Zur Verbesserung der Dosiergenauigkeit der Flüssigkomponente werden bevorzugt zwischen Dosierpumpe 10a, 10b und Durchflussmesser 15 Pulsationsdämpfer (Blasenspeicher) eingesetzt, welche Pulsationen ausgehend von der Dosierpumpe 10a, 10b dämpfen bzw. glätten.

Zusätzlich gibt es die Möglichkeit, die Flüssigkomponente bereits im Vorratsbehälter 13a, 13b und/oder zwischen dem Pumpenstand und der Einspritzstelle auf eine gewünschte Temperatur (50 - 100 °C) vorzuwärmen. Vorzugsweise wird die Flüssigkomponente, also insbesondere der Plasticizer, nach der Dosierpumpe 10a, 10b durch einen Wärmetauscher geleitet, wo sie mittels Thermalöl auf die gewünschte Temperatur vorgewärmt wird. Die Leitung zwischen Wärmetauscher und Einspritzdüse wird mit einer Begleitheizung ausgerüstet, um die vorgewärmte Flüssigkomponente auf Temperatur zu halten. Temperatursensoren (nicht dargestellt) können die Temperatur messen, wodurch die Heizleistung regelbar ist.

Die Dosieranordnung 8 ist dazu ausgebildet, das Verhältnis der dem Planetwalzenextruder 3 zugeführten Menge an Polymer und Flüssigkomponente einzustellen, wobei auf 20-50 Gewichtsanteile des Polymers 80-50 Gewichtsanteile der Flüssigkomponente hinzufügbar sind. Vorzugsweise sind auf 25-45 Gewichtsanteile des Polymers 75-55 Gewichtsanteile der Flüssigkomponente hinzufügbar und noch weiter bevorzugt sind auf 30-40 Gewichtanteile des Polymers 70-60 Gewichtsanteile der Flüssigkomponente hinzufügbar.

Insbesondere können dadurch Batterieseparatorfolien hergestellt werden, weil eine schonende Materialaufbereitung, eine gute Homogenisierung und Dispergierung und eine Massetemperaturkontrolle aufgrund großer Polymeroberflächen und Temperierbarkeit der Zentralspindel 20 möglich ist. Bei Batterieseparatorfolien (UHMWPE / HMWPE) liegt der Polyethylen (PE) Anteil bei 30% bis 40% und der Anteil der Flüssigkomponente bei 60% bis 70%.

Der Anteil der Flüssigkomponente kann über eine Einspritzstelle oder auch über mehrere Einspritzstellen (verteilt über die Verfahrenslänge) eingespritzt werden.

In Figur 1 ist ebenfalls eine Antriebsvorrichtung 16 dargestellt, die zum Antreiben des Planetwalzenextruders 3 dient. Hierbei handelt es sich vorzugsweise um einen Elektromotor.

Der Planetwalzenextruder 3 umfasst n-Walzenzylinder 3₁ bis 3ₙ, mit n ≥ 1 n ≥ 2, n ≥ 3, n ≥ 4, n ≥ 5, n ≥ 6, n ≥ 7, n ≥ 8, n ≥ 9 oder n ≥ 10. In Figur 1 sind sechs Walzenzylinder 3₁ bis 3₆ dargestellt.

Diese n-Walzenzylinder 3₁, ..., 3ₙ sind entlang ihrer Längsachse 17 benachbart zueinander angeordnet und aneinander befestigt, insbesondere miteinander verschraubt. Die Walzenzylinder 3₁, ..., 3ₙ sollten zusätzlich abgedichtet sein, so dass die Anlage 1 als dauerhaft technisch dicht zu betrachten ist. Dabei kann metallisch abgedichtet werden oder mittels Dichtungen, die beispielsweise PTFE, Viton^{®} (besteht oder umfasst Fluor-Kautschuk bzw. Fluor-Karbon-Kautschuk), Aluminium, Grafit, Grafoil, etc. umfassen oder daraus bestehen. Der Planetwalzenextruder 3 ist daher in Modulbauweise aufgebaut. Er kann dabei eine beliebige Anzahl an Walzenzylindern 3₁, ..., 3ₙ umfassen. Insbesondere kann die Anzahl der Walzenzylinder 3₁,...,3ₙ je nach herzustellender Kunststoffschmelze 2 angepasst werden.

Der genaue Aufbau des Planetwalzenextruders 3 kann den Figuren 2, 3 und 4 entnommen werden. Wie in Figur 1 dargestellt, umfasst das Ausführungsbeispiel des Planetwalzenextruders 3 in Figur 2 ebenfalls sechs Walzenzylinder 3₁, ..., 3₆, die entlang ihrer Längsachse 17 zueinander angeordnet und miteinander verschraubt und/oder mit Klemmen verbunden sind. Das Hinzufügen der Ausgangskomponenten in die Befüllungsöffnung 3a erfolgt, wie erläutert, über eine Seitenbeschickung 7. In diesem Fall umfasst die Dosieranordnung 8 bzw. die Dosierpumpenanordnung 10 lediglich eine erste Dosierpumpe 10a. Es könnten natürlich auch mehrere Dosierpumpen 10a eingesetzt werden. Diese erste Dosierpumpe 10a ist in diesem Fall nicht direkt an den ersten Vorratsbehälter 13a der Flüssigkomponente angeschlossen. Vielmehr gibt es wiederum einen ersten und einen zweiten Vorratsbehälter 13a, 13b, wobei die erste Dosierpumpe 10a über einen Kugelhahn 18 entweder mit dem ersten Vorratsbehälter 13a oder mit dem zweiten Vorratsbehälter 13b verbunden bzw. verbindbar ist. Die Stellung des Kugelhahns 18 kann entweder manuell von Hand oder automatische über eine nicht dargestellte Einstelleinrichtung gewählt werden. Die Einstelleinrichtung könnte über die Steuereinrichtung 14 angesteuert werden. Selbstverständlich könnte auch nur genau ein Vorratsbehälter 13a eingesetzt werden. In diesem Fall kann der Kugelhahn 18 entfallen. Die Anzahl der Vorratsbehälter 13a, 13b ist beliebig und mehrere Vorratsbehälter 13a, 13b erlauben einen schnelleren Wechsel der Flüssigkomponente im laufenden Betrieb.

Eine Antriebsvorrichtung 16 treibt wiederum den Planetwalzenextruder 3 an. Zwischen der Antriebsvorrichtung 16 und dem ersten Walzenzylinder 3₁, der die Befüllungsöffnung 3a aufweist, ist noch ein Zugabezylinder 19 vorgesehen. Dieser könnte bei der Herstellung von anderen Folien verwendet werden. Der Zugabezylinder 19 umfasst lediglich eine Förderschnecke, die ebenfalls in Längsrichtung 17 des Planetwalzenextruders 3 ausgerichtet ist. Dieser Zugabezylinder 19 wird für die erfindungsgemäße Anlage 1 nicht benötigt, verdeutlicht aber die modulare Bauweise der Anlage im Allgemeinen und des Planetwalzenextruders 3 im Speziellen. Dieser Zugabezylinder 19 ist insbesondere mittels einer nicht dargestellten Viton^{®}-Wellendichtung (besteht oder umfasst Fluor-Kautschuk bzw. Fluor-Karbon-Kautschuk) so abgedichtet, dass keine Kunststoffschmelze 2 bzw. keine Ausgangskomponenten (Polymer bzw. Flüssigkomponente) in diesen entweichen können.

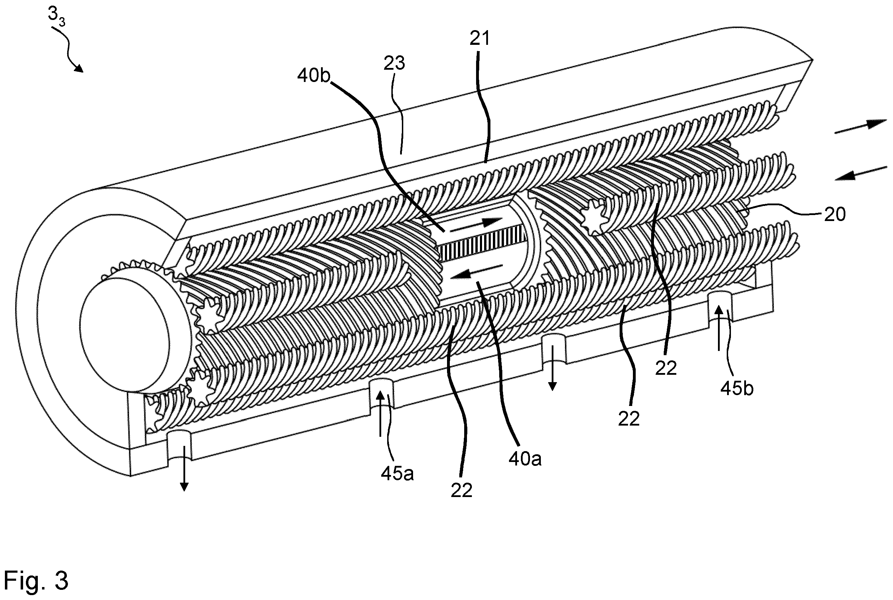

In Figur 3 ist ein beispielhafter Walzenzylinder 3₃ dargestellt. Anzumerken ist, dass der gesamte Planetwalzenextruder 3 von einer Zentralspindel 20 durchsetzt wird. Diese verläuft durch alle Walzenzylinder 3₁, ..., 3ₙ und ist vorzugsweise einteilig ausgebildet. Diese Zentralspindel 20 ist verzahnt. Weiterhin umfasst jeder Walzenzylinder 3₁, ..., 3ₙ eine innenverzahnte Zylinderhülse 21 (die Innenverzahnung ist in den Figuren nicht dargestellt) und m verzahnte Planetspindeln 22 mit, m ≥ 3, m ≥ 5, m ≥ 7, m ≥ 9, m ≥ 11, m ≥ 13 bis hin zu m ≥ 20. Die Zentralspindel 20 und die m-Planetspindeln 22 sind innerhalb der Zylinderhülse 21 des jeweiligen Walzenzylinders 3₁, ..., 3ₙ angeordnet. Die Planetspindeln 22 sind dabei zwischen der Zentralspindel 20 (im Zentrum) und der Zylinderhülse 21 angeordnet. Vorzugsweise ist lediglich die Zentralspindel 20 durch die Antriebsvorrichtung 16 antreibbar, wobei sich die m-Planetspindeln 22 durch Drehen der Zentralspindel 20 auf der Zentralspindel 20 und der Zylinderhülse 21 abwälzen.

Dargestellt ist ebenfalls, dass die Verzahnung der Zylinderhülse 21, der Zentralspindel 20 und der Planetspindeln 22 eine 45° Schrägverzahnung (Drallverzahnung) ist, wodurch eine Vorwärtsströmung der Kunststoffschmelze 2 entsteht und diese gleichzeitig ausgewalzt wird.

Die Zylinderhülse 21 kann noch durch eine Außenhülse 23 fixiert und umgeben werden.

Im Hinblick auf Figur 2 sind die Planetspindeln 22 innerhalb der meisten Walzenzylinder 3₁, ..., 3ₙ ausschließlich innerhalb des jeweiligen Walzenzylinders 3₁, ..., 3ₙ angeordnet und erstrecken sich nicht von diesem in benachbarte Walzenzylinder 3₁, ..., 3ₙ. Eine Ausnahme kann sich für die ersten beiden benachbarten Walzenzylinder 3₁, 3₂ ergeben. Diese umfassen vorzugsweise durchgehende Planetspindeln 22, die sowohl im ersten als auch im zweiten Walzenzylinder 3₁, 3₂ angeordnet sind. Damit sich diese gut abwälzen können, ist vorzugsweise zwischen den ersten beiden benachbarten Walzenzylindern 3₁, 3₂ ein verzahnter Zwischenring 25 eingesetzt. Der verzahnte Zwischenring 25 bildet dabei die Innenverzahnung der Zylinderhülse 21 ab. In Figur 2 ist außerdem dargestellt, dass innerhalb eines Walzenzylinders 3₁, ..., 3ₙ, insbesondere innerhalb des ersten Walzenzylinders 3₁ noch ein zusätzlicher verzahnter Zwischenring 25 eingesetzt ist. Dieser ist vorzugsweise in der Mitte des ersten Walzenzylinders 3₁ eingesetzt.

Zumindest ab dem zweiten Walzenzylinder 3₂ bis vorzugsweise zum n-ten Walzenzylinder 3ₙ ist jeweils zwischen zwei benachbarten Walzenzylindern 3i, ..., 3ₙ ein Dispergierring 26 angeordnet. Der Dispergierring 26 am zweiten Walzenzylinder 3₂ (im Übergang zum dritten Walzenzylinder 3₃) hat vorzugsweise einen größeren Ringspalt als der Dispergierring 26 zwischen dem n-1-ten Walzenzylinder 3ₙ₋₁ und dem n-ten Walzenzylinder 3ₙ. Vorzugsweise ist lediglich der erste Dispergierring 26, also derjenige, welcher am nächsten an der Befüllungsöffnung 3a angeordnet ist, mit einem größeren Ringspalt ausgestattet. Die Ringspalte aller anderen Dispergierringe 26 sind vorzugsweise gleich groß.

Die Verzahnung der Zentralspindel 20 ist beim Übergang von einem Walzenzylinder 3₁, ..., 3ₙ₋₁ zu einem benachbarten Walzenzylinder 3₂, ..., 3ₙ, unterbrochen. Selbiges kann auch für die Verzahnung der Planetspindeln 22 gelten. Diese können grundsätzlich auch in (regelmäßigen) Abständen unterbrochen sein, wodurch die Querdurchmischungen vergrößert werden.

Die Dosieranordnung 8 umfasst in diesem Beispiel noch eine oder mehrere weitere Einspritzanordnungen 11, wobei diese eine oder diese mehreren weiteren Einspritzanordnungen 11 jeweils entlang des Planetwalzenextruders 3, insbesondere am Übergangsbereich von einem Walzenzylinder 3₁, ..., 3ₙ zu einem anderen benachbarten Walzenzylinder 3₁, ..., 3ₙ angeordnet und dazu ausgebildet sind, eine zusätzliche genau dosierte Menge der Flüssigkomponente in den Planentenwalzenextruder 3 einzuspritzen. Diese weiteren Einspritzanordnungen 11 könnten auch im jeweiligen Walzenzylinder 3₁, ..., 3ₙ angebracht sein. Es können jeweils dieselben Flüssigkomponenten oder unterschiedliche Flüssigkomponenten eingespritzt werden. Auch die Menge kann von Einspritzanordnung 11 zu Einspritzanordnung 11 entlang des Planetwalzenextruders 3 variieren.

In Figur 2 ist ebenfalls der Einsatz von verschiedenen Drucksensoren 30, 31 dargestellt. Vorzugsweise ein Drucksensor 30 ist am n-ten Walzenzylinder 3ₙ oder zwischen dem n-ten Walzenzylinder 3ₙ und der Einlassseite 4a der Schmelzepumpe 4 angeordnet und dazu ausgebildet, einen Druck in der Kunststoffschmelze 2 zu messen. Die Steuereinrichtung 14 ist dann dazu ausgebildet, bei einem gemessenen Druckwert, der unterhalb eines Referenzwerts liegt, die Dosieranordnung 8 bezüglich ihrer Ausgabemenge derart anzusteuern, dass diese ihre Ausgabemenge erhöht. Ergänzend oder alternativ dazu ist die Steuereinrichtung 14 dazu ausgebildet, die Antriebsvorrichtung 16 bezüglich der Drehzahl der Zentralspindel 20 derart anzusteuern, dass diese ihre Drehzahl erhöht. Ergänzend oder alternativ dazu ist die Steuereinrichtung 14 dazu ausgebildet, die Schmelzepumpe 4 bezüglich der Pumpendrehzahl derart anzusteuern, dass diese ihre Drehzahl verringert. Dadurch wird erreicht, dass der durch den zumindest einen Drucksensor 30 gemessene Druck den vorbestimmten Referenzwert in etwa (Abweichung vorzugsweise < 10%) erreicht.

Ergänzend oder alternativ ist die Steuereinrichtung 14 auch dazu ausgebildet, dass bei einem gemessenen Druckwert, der oberhalb eines Referenzwerts liegt, die Dosieranordnung 8 bezüglich ihrer Ausgabemenge derart angesteuert wird, dass diese ihre Ausgabemenge verringert. Ergänzend oder alternativ dazu ist die Steuereinrichtung 14 dazu ausgebildet, die Antriebsvorrichtung 16 bezüglich der Drehzahl der Zentralspindel 20 derart anzusteuern, dass diese ihre Drehzahl verringert. Ergänzend oder alternativ dazu ist die Steuereinrichtung 14 dazu ausgebildet, die Schmelzepumpe 4 bezüglich der Pumpendrehzahl derart anzusteuern, dass diese ihre Drehzahl erhöht. Dadurch wird erreicht, dass der durch den zumindest einen Drucksensor 30 gemessene Druck den vorbestimmten Referenzwert in etwa (Abweichung vorzugsweise < 10%) erreicht.

Wie in Figur 2 dargestellt ist, kann es mehrere weitere Drucksensoren 31 geben, die an anderen Walzenzylindern 3₁, ..., 3ₙ₋₁ oder zwischen den anderen Walzenzylindern 3₁,...,3ₙ₋₁ angeordnet und dazu ausgebildet sind, einen Druck innerhalb des Planetwalzenextruders 3 zu messen. Die Steuereinrichtung 14 ist dazu ausgebildet, bei Druckschwankungen zumindest eines gemessenen Druckwerts von dem zumindest einen Drucksensor 30 oder den mehreren weiteren Drucksensoren 31, die oberhalb eines Schwellwerts liegen, die Antriebsvorrichtung 16 bezüglich der Drehzahl der Zentralspindel 20 derart anzusteuern, dass diese ihre Drehzahl verringert und/oder die Schmelzepumpe 4 bezüglich der Pumpendrehzahl derart anzusteuern, dass diese ihre Drehzahl erhöht. Denn hohe Druckschwankungen deuten häufig auf eine unzureichende Homogenisierung aufgrund zu geringer Verweilzeit der Kunststoffschmelze 2 innerhalb des Planetwalzenextruders 3 hin. Zusätzlich kann es bei einem zu geringen Füllgrad zu Druckstößen durch teilgefüllte Bereiche und schwallartigen Entladungen an rückstauenden Bereichen wie den Dispergierringen 26 kommen.

Haupteinfluss auf die Verweilzeit der Kunststoffschmelze 2 in dem Planetwalzenextruder 3 ist neben dem Rückstau der Kunststoffschmelze 2 aufgrund des Pumpenvordrucks auch die Drehzahl des Planetwalzenextruders 3 bei einem bestimmten Ausstoß. Je schneller die Zentralspindel 20 bei gleichem Ausstoß dreht, desto geringer wird der spezifische Ausstoß und damit die Verweilzeit. Damit geht eine Erhöhung der Scherung und somit der Massetemperatur einher.

Je geringer die Drehzahl des Planetwalzenextruders 3 bei gleichbleibendem Ausstoß, desto höher der spezifische Ausstoß und damit die Verweilzeit. Damit geht eine Reduzierung der Scherung und somit der Massetemperatur einher.

Je nach Rezeptur und zulässiger Massetemperatur kann der optimale Betriebspunkt eingestellt werden.

Wichtig ist dabei, eine gute Homogenisierung bei geringer Massetemperatur und geringen Druckschwankungen zu erreichen. Hohe Druckschwankungen deuten in der Regel auf Inhomogenitäten in der Kunststoffschmelze 2 hin. Druckschwankungen können auch auftreten, wenn der spezifische Ausstoß des Planetwalzenextruders 3 zu gering oder zu hoch ist. Bei zu geringem spezifischen Ausstoß kann es in teilgefüllten Bereichen zu Druckstößen aufgrund schwallartiger Entladung an rückstauenden Bereichen wie Dispergierringen kommen. Bei zu hohem spezifischen Ausstoß reicht die in die Kunststoffschmelze 2 eingetragene Scherung nicht aus, um eine homogene Kunststoffschmelze 2 zu generieren.

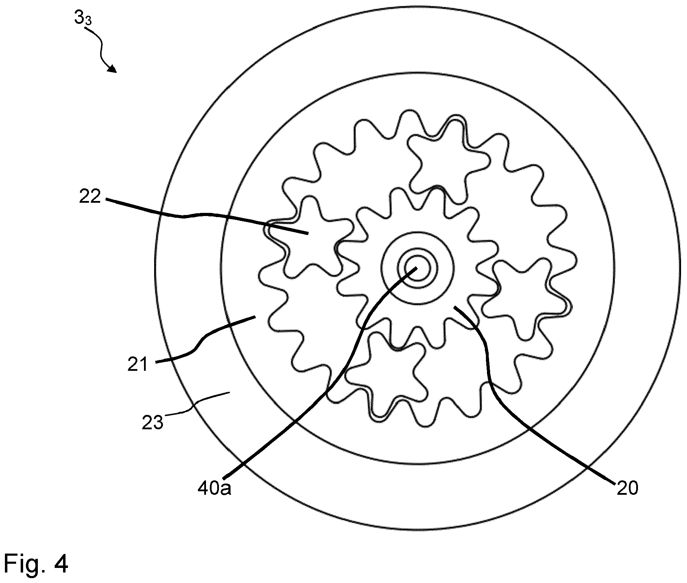

Im Hinblick auf die Figuren 2, 3 und 4 ist zu erkennen, dass die Zentralspindel 20 vollständig entlang ihrer Länge von zumindest einem Fluidkanal 40a durchsetzt ist. In Figur 4 ist ein Fluidkanal 40a dargestellt, wohin gegen es in den Figuren 2 und 3 zwei Fluidkanäle 40a, 40b sind. In Figur 3 dient ein Fluidkanal 40a als Hinlaufkanal und der andere Fluidkanal 40b als Rücklaufkanal. Es sind weiterhin eine Pumpenanordnung 41 und eine Heiz-und/oder Kühlanordnung 42 vorgesehen (siehe Figur 2), die dazu ausgebildet sind, Fluid, insbesondere in Form von Thermalöl oder Wasser auf eine bestimmte Temperatur zu temperieren und durch den zumindest einen Fluidkanal 40a zu leiten. Dadurch kann die Kunststoffschmelze 2 auf eine bestimmte Temperatur temperiert werden. Die Zentralspindel 20 umfasst entsprechende Anschlüsse bzw. Ein-/Ausgänge für den Fluidkanal 40a bzw. die Fluidkanäle 40a, 40b, die an denselben oder verschiedenen Enden der Zentralspindel 20 angeordnet sind.

Ähnlich sieht es auch bei den Walzenzylindern 3₁, ..., 3ₙ aus. Jeder Walzenzylinder 3₁, ..., 3ₙ umfasst zumindest einen Temperierungskanal 45a (siehe Figur 2). Es sind eine Pumpenanordnung 50 und eine Temperieranordnung 51 vorgesehen und dazu ausgebildet, um ein Fluid auf eine bestimmte Temperatur zu temperieren und durch den zumindest einen Temperierungskanal 45a des jeweiligen Walzenzylinders 3₁, ..., 3ₙ zu leiten, um dadurch die Kunststoffschmelze 2 innerhalb dieses Walzenzylinders 3₁, ..., 3ₙ auf eine bestimmte Temperatur zu temperieren. Die zumindest einen Temperierungskanäle 45a der Walzenzylinder 3₁, ..., 3ₙ sind voneinander getrennt (werden nicht durch dasselbe Fluid durchflossen) und sind daher unterschiedlich temperierbar, wobei die Temperatur eines Fluids im ersten Walzenzylinder 3₁ idealerweise höher ist als die Temperatur eines Fluids im n-ten Walzenzylinder 3ₙ. Dies muss aber nicht so sein. In Figur 3 sind die Temperierungskanäle 45a nur beispielhaft angedeutet. Diese stellen selbstverständlich keine Öffnung dar aus der die Kunststoffschmelze 2 austreten kann.

Bevorzugt wird die Temperatur des Fluids, welches durch die Zentralspindel 20 hindurch geleitet wird, auf 170° C (Abweichung ≤ ± 10° C oder ≤ ± 5° C) genau eingestellt. Generell sollte die Temperatur allerdings höher als 130°C, 140°C, 150°C, 160°C, 170°C, 180°C, 190°C oder höher als 200°C sein, aber vorzugsweise niedriger als 205°C, 195°C, 185°C, 175°C, 165°C, 155°C, 145°C oder niedriger als 135°C.

Im ersten Walzenzylinder 3₁ wird die Temperatur vorzugsweise ebenfalls auf 170° C (Abweichung ≤ ± 10° C, ≤ ± 5° C) eingestellt. Generell sollte die Temperatur allerdings höher als 80°C, 90°C, 100°C, 110°C, 120°C, 130°C, 140°C, 150°C, 160°C, 170°C, 180°C, 190°C oder höher als 200°C sein, aber vorzugsweise niedriger als 205°C, 195°C, 185°C, 175°C, 165°C, 155°C, 145°C, 135°C, 125°C, 115°C, 105°C, 95°C oder niedriger als 85°C.

Im zweiten und im dritten Walzenzylinder 3₂, 3₃ wird die Temperatur vorzugsweise auf 160° C (Abweichung ≤ ± 10° C oder ≤ ± 5° C) genau eingestellt. Generell sollte die Temperatur allerdings höher als 100°C, 110°C, 120°C, 130°C, 140°C, 150°C, 160°C oder höher als 170°C sein, aber vorzugsweise niedriger als 175°C, 165°C, 155°C, 145°C, 135°C, 125°C, 115°C oder niedriger als 105°C.

Im vierten bis zum sechsten und vorzugsweise bis zum n-ten Walzenzylinder 3₄, ..., 3ₙ wird die Temperatur vorzugweise auf 130° C eingestellt (Abweichung: ≤ ± 10° C oder ≤ ± 5° C). Generell sollte die Temperatur allerdings höher als 100°C, 110°C, 120°C, 130°C, 140°C, 150°C, 160°C oder höher als 170°C sein, aber vorzugsweise niedriger als 175°C, 165°C, 155°C, 145°C, 135°C, 125°C, 115°C oder niedriger als 105°C.

Durch diese Temperatureinstellungen können Homogenität, Druckschwankungen und Düsenstreifen optimal gehalten werden. Durch die Möglichkeit die Zentralspindel 20 sowie Walzenzylinder 3₁, ..., 3ₙ individuell zu temperieren, kann u.a. die Massetemperatur und Homogenität positiv beeinflusst werden.

In Figur 3 ist gezeigt, dass ein, mehrere oder alle Walzenzylinder 3₁, ..., 3ₙ zumindest einen weiteren Temperierungskanal 45b umfasst. Der zumindest eine Temperierungskanal 45a und der zumindest eine weitere Temperierungskanal 45b sind innerhalb des jeweiligen Walzenzylinders 3₁, ..., 3ₙ in Längsrichtung und/oder in Umfangsrichtung des jeweiligen Walzenzylinders 3₁, ..., 3ₙ versetzt zueinander angeordnet. Die Pumpenanordnung 50 und die Temperieranordnung 51 sind weiterhin dazu ausgebildet, um ein Fluid auf eine bestimmte Temperatur zu temperieren und durch den zumindest einen weiteren Temperierungskanal 45b des jeweiligen Walzenzylinders 3₁, ..., 3ₙ zu leiten, um dadurch die Kunststoffschmelze 2 auf eine bestimmte Temperatur zu temperieren. Der zumindest eine Temperierungskanal 45a und der zumindest eine weitere Temperierungskanal 45b des jeweiligen Walzenzylinders 3₁, ..., 3ₙ sind voneinander getrennt und das jeweilige Fluid innerhalb dieser Temperierungskanäle 45a, 45b unterschiedlich temperierbar. Dadurch kann eine sehr genaue Temperatureinstellung vorgenommen werden. Die Kunststoffschmelze 2 kommt mit dem Fluid natürlich nicht in Kontakt. Die Temperierungskanäle 45a, 45b wurden in Figur 3 nur zu besseren Übersichtlichkeit deutlich eingezeichnet. Ein Austreten der Kunststoffschmelze 2 aus den Temperierungskanälen 45a, 45b findet nicht statt.

Hierzu werden bevorzugt mehrere Temperatursensoren 35 verwendet, die an verschiedenen Walzenzylindern 3₁, ..., 3ₙ oder zwischen verschiedenen Walzenzylindern 3₁, ..., 3ₙ angeordnet und dazu ausgebildet sind, eine Temperatur der Kunststoffschmelze 2 an verschiedenen Stellen innerhalb des Planetwalzenextruders 3 zu messen. Durch die Temperatursensoren 35 kann die Massetemperatur der Kunststoffschmelze 2 oder die Stahltemperatur der Walzenzylinder 3₁, ..., 3ₙ gemessen werden. Wenn die Temperatur des Walzenzylinders 3₁, ..., 3ₙ von der Soll-Temperatur abweicht, muss nur die Temperierung angepasst werden. Für den Fall, dass die reale Massetemperatur die zulässige Massetemperatur überschreitet, müssen Maßnahmen getroffen werden, um die Massetemperatur vor dem Austritt aus der Breitschlitzdüse 5 oder dem Spülventil abzukühlen z.B. Wärmezufuhr durch Heiz- und/oder Kühlanordnung zu stoppen (z.B. in der Schmelzeleitung, dem Schmelzefilter und/oder der Breitschlitzdüse 5) bzw. den Planetwalzenextruder 3 anzuhalten.

Die Steuereinrichtung 14 ist dazu ausgebildet, für den Fall, dass ein Temperaturwert von einem oder mehreren der Temperatursensoren 35 einen Temperaturreferenzwert überschreitet, die Pumpenanordnung 50 und die Temperieranordnung 51 derart anzusteuern, dass diese das Fluid in demjenigen Walzenzylinder 3₁, ..., 3ₙ schneller einpumpt und/oder weiter abkühlt, an dem derjenige Temperatursensor 35 angeordnet ist, dessen Temperaturwert den Temperaturreferenzwert überschritten hat, um so die Kunststoffschmelze 2 abzukühlen. Der Durchfluss durch die Pumpenanordnung 50 bleibt vorzugsweise konstant. Lediglich die Temperatur des Fluids, welches durch die Pumpenanordnung gepumpt wird, wird verändert. Ergänzend oder alternativ ist die Steuereinrichtung 14 dazu ausgebildet, den Planetwalzenextruder 3 anzuhalten.

Ergänzend oder alternativ ist die Steuereinrichtung 14 außerdem dazu ausgebildet, für den Fall, dass ein Temperaturwert von einem oder mehreren der Temperatursensoren 35 einen Temperaturreferenzwert unterschreitet, die Pumpenanordnung 50 und die Temperieranordnung 51 derart anzusteuern, dass diese das Fluid in demjenigen Walzenzylinder 3₁, ..., 3ₙ langsamer einpumpt und/oder erwärmt, an dem derjenige Temperatursensor 35 angeordnet ist, dessen Temperaturwert den Temperaturreferenzwert unterschritten hat, um so die Kunststoffschmelze 2 aufzuheizen. Dadurch kann eine sehr gezielte Temperaturregelung erfolgen.

In dem zumindest einen Fluidkanal 40a zur Zentralspindel 20 bzw. in den Temperierungskanälen 45a bzw. 45b der Walzenzylinder 3₁, ..., 3ₙ kann Thermalöl mit Temperaturen von bis zu 300° C eingepumpt werden.

Nachfolgend werden nochmals einige Ausführungsformen der Erfindung gesondert hervorgehoben. Die einzelnen Ausführungsformen können sich aufeinander beziehen und miteinander zur Erzielung besonderer Effekte zusammenwirken. Besondere aufeinander abgestimmte Wirkungsweisen, auch in Zusammenhang mit den Ansprüchen, werden nachfolgend nochmals gesondert hervorgehoben. Es ist allerdings klar, dass die dargestellten Kombinationen nur exemplarisch sind und den erfindungsgemäßen Gegenstand nicht limitieren sollen und durch weitere Merkmale aus der Beschreibung ergänzt werden können.

In der Ausführungsform B umfasst die Anlage 1 vorzugsweise noch das folgende Merkmal, wobei sich die Ausführungsform B auf alle Ausführungsformen und alle Ansprüche beziehen kann:
- die Befüllungsöffnung 3a ist als gemeinsame Befüllungsöffnung 3a für ein Polymer, insbesondere für ein pulverförmiges Polymer und für Füllstoffe, insbesondere in Form von Flüssigkomponenten vorgesehen.

In der Ausführungsform C umfasst die Anlage 1 vorzugsweise noch das folgende Merkmal, wobei sich die Ausführungsform C auf alle Ausführungsformen und alle Ansprüche beziehen kann:
- an der Befüllungsöffnung 3a ist eine Stickstoffatmosphäre angelegt.

In der Ausführungsform D umfasst die Anlage 1 vorzugsweise noch das folgende Merkmal, wobei sich die Ausführungsform D insbesondere auf den Anspruch 4 beziehen kann:
- die Verzahnung der Zentralspindel 20, der Zylinderhülse 21 und der Planetspindeln 22 ist eine 45° Schrägverzahnung, wodurch eine Vorwärtsströmung der Kunststoffschmelze 2 entsteht und diese gleichzeitig auswalzbar ist.

In der Ausführungsform E umfasst die Anlage 1 vorzugsweise noch das folgende Merkmal, wobei sich die Ausführungsform E insbesondere auf den Anspruch 5 beziehen kann:
- es sind ein erster und ein zweiter Vorratsbehälter 13a, 13b für eine erste und eine zweite Flüssigkomponente vorgesehen;
   die Dosierpumpenanordnung 10 ist mit dem ersten Vorratsbehälter 13a und/oder mit dem zweiten Vorratsbehälter 13b verbunden oder verbindbar, sodass entweder die erste Flüssigkomponente und/oder die zweite Flüssigkomponente der Befüllungsöffnung 3a zuführbar ist; oder
- es sind ein erster und ein zweiter Vorratsbehälter 13a, 13b für eine erste und eine zweite Flüssigkomponente vorgesehen; die Dosierpumpenanordnung 10 umfasst eine erste Dosierpumpe 10a und eine zweite Dosierpumpe 10b, wobei die erste Dosierpumpe 10a mit dem ersten Vorratsbehälter 13a und die zweite Dosierpumpe 10b mit dem zweiten Vorratsbehälter 13b verbunden oder verbindbar ist, so dass entweder die erste Flüssigkomponente und/oder die zweite Flüssigkomponente der Befüllungsöffnung 3a zuführbar ist.

In der Ausführungsform F umfasst die Anlage 1 vorzugsweise noch das folgende Merkmal, wobei sich die Ausführungsform F insbesondere auf den Anspruch 5 beziehen kann:
- die Dosieranordnung 8 umfasst eine oder mehrere weitere Einspritzanordnungen 11, wobei diese eine oder diese mehreren weiteren Einspritzanordnungen 11 jeweils entlang des Planetwalzenextruders 3, insbesondere am Übergangsbereich von einem Walzenzylinder 3₁, ..., 3ₙ zu einem anderen benachbarten Walzenzylinder 3₁, ..., 3ₙ angeordnet und dazu ausgebildet sind, eine zusätzliche dosierte Menge der Flüssigkomponente in den Planetwalzenextruder 3 einzuspritzen.

In der Ausführungsform G umfasst die Anlage 1 vorzugsweise noch die folgenden Merkmale, wobei sich die Ausführungsform G insbesondere auf den Anspruch 7 beziehen kann:
- es sind mehrere weitere Drucksensoren 31 vorgesehen, die an anderen Walzenzylindern 3₁, ..., 3ₙ₋₁ oder zwischen den anderen Walzenzylindern 3₁, ..., 3ₙ₋₁ angeordnet und dazu ausgebildet sind, einen Druck der Kunststoffschmelze 2 innerhalb des Planetwalzenextruders 3 zu messen;
- die Steuereinrichtung 14 ist dazu ausgebildet ist, bei zumindest einem gemessenen Druckwert von dem zumindest einen Drucksensor 30, der oberhalb eines Schwellwerts liegt:
   i) die Antriebsvorrichtung 16 bezüglich der Drehzahl der Zentralspindel 20 derart anzusteuern, dass diese ihre Drehzahl verringert; und/oder
   ii) die Schmelzepumpe 4 bezüglich der Pumpendrehzahl derart anzusteuern, dass diese ihre Drehzahlerhöht.

In der Ausführungsform H umfasst die Anlage 1 vorzugsweise noch die folgenden Merkmale, wobei sich die Ausführungsform H insbesondere auf den Anspruch 13 beziehen kann:
- einer, mehrere oder alle Walzenzylinder 3₁, ..., 3ₙ umfassen zumindest einen weiteren Temperierungskanal 45b;
- der zumindest eine Temperierungskanal 45a und der zumindest eine weitere Temperierungskanal 45b sind innerhalb des jeweiligen Walzenzylinders 3₁, ..., 3ₙ in Längsrichtung und/oder in Umfangsrichtung des jeweiligen Walzenzylinders 3₁, ..., 3ₙ versetzt zueinander angeordnet;
- Pumpenanordnung 50 und die Temperieranordnung 51 sind weiterhin dazu ausgebildet, um ein Fluid auf eine bestimmte Temperatur zu temperieren und durch den zumindest einen weiteren Temperierungskanal 45b des jeweiligen Walzenzylinders 3₁, ..., 3ₙ zu leiten, um dadurch die Kunststoffschmelze 2 auf eine bestimmte Temperatur zu temperieren;
der zumindest eine Temperierungskanal 45a und der zumindest eine weitere Temperierungskanal 45b des jeweiligen Walzenzylinders 3₁, ..., 3ₙ sind voneinander getrennt und das jeweilige Fluid innerhalb dieser Temperierungskanäle 45a, 45b unterschiedlich temperierbar.

In der Ausführungsform I umfasst die Anlage 1 vorzugsweise noch die folgenden Merkmale, wobei sich die Ausführungsform I insbesondere auf die Ausführungsform H und/oder den Anspruch 13 beziehen kann:
- es sind mehrere Temperatursensoren 35 vorgesehen, die an verschiedenen Walzenzylindern 3₁, ..., 3ₙ oder zwischen verschiedenen Walzenzylindern 3₁, ..., 3ₙ angeordnet und dazu ausgebildet sind, eine Temperatur der Kunststoffschmelze 2 an verschiedenen Stellen innerhalb des Planentenwalzenextruder 3 zu messen;
- eine Steuereinrichtung 14 ist dazu ausgebildet, für den Fall, dass ein Temperaturwert von einem oder mehreren der Temperatursensoren 35 einen Temperaturreferenzwert:
   a) überschreitet, die Pumpenanordnung 50 und die Temperieranordnung 51 derart anzusteuern, dass diese das Fluid in demjenigen Walzenzylinder 3₁, ..., 3ₙ schneller einpumpt und/oder abkühlt, an dem derjenige Temperatursensor 35 angeordnet ist, dessen Temperaturwert den Temperaturreferenzwert überschritten hat, um so die Kunststoffschmelze 2 abzukühlen;
      und/oder
   b) unterschreitet, die Pumpenanordnung 50 und die Temperieranordnung 51 derart anzusteuern, dass diese das Fluid in demjenigen Walzenzylinder 3₁, ..., 3ₙ langsamer einpumpt und/oder erwärmt, an dem derjenige

Temperatursensor 35 angeordnet ist, dessen Temperaturwert den Temperaturreferenzwert unterschritten hat, um so die Kunststoffschmelze 2 aufzuheizen.

In der Ausführungsform J umfasst die Anlage 1 vorzugsweise noch das folgende Merkmal, wobei sich die Ausführungsform J insbesondere auf irgendeinen der Ansprüche beziehen kann:
- die Schmelzepumpe 4 ist elektrisch beheizbar; oder
- die Schmelzepumpe 4 ist mittels Thermalöl beheizbar.

In der Ausführungsform K umfasst die Verwendung der Anlage 1 vorzugsweise noch das folgende Merkmal, wobei sich die Ausführungsform K insbesondere auf den Anspruch 15 beziehen kann:
- die Flüssigkomponente besteht aus oder umfasst ein Lösemittel; und/oder
- die Flüssigkomponente umfasst oder besteht aus einem oder mehreren der folgenden Mittel:
   a) Paraffinöl,
   b) Hydrocarbons;
   c) Petroleum Hydrocarbons; und/oder
   d) White Mineral Oil.

## Patentansprüche

1. Anlage (1) zur Herstellung einer Kunststoffschmelze (2) für poröse Folien in Form von Membranfolien mit den folgenden Merkmalen:
- mit einem Planetwalzenextruder (3) zur Herstellung einer fließfähigen Kunststoffschmelze (2) aus thermoplastischen Kunststoffen;
- der Planetwalzenextruder (3) weist eine Befüllungsöffnung (3a) und eine Ausstoßseite (3b) zur Abgabe der Kunststoffschmelze (2) auf;
weiter spezifiziert **durch** die folgenden Merkmale:
- es ist eine Schmelzepumpe (4) vorgesehen;
- die Ausstoßseite (3b) des Planetwalzenextruders (3) steht mit einer nachgeordneten Einlassseite (4a) der Schmelzepumpe (4) zur Weiterbeförderung der Kunststoffschmelze (2) in Verbindung;
- die Verbindung ist als gegenüber der Umgebungsatmosphäre:
a) abgeschirmter Druckkanal; oder
b) abgeschirmte Druckleitung (6)
ausgebildet;
- der Planentenwalzenextruder (3) und die Schmelzepumpe (4) sind so ausgebildet und/oder antreibbar, dass die Kunststoffschmelze (2) unter Druck an der Einlassseite (4a) an der Schmelzepumpe (4) ansteht bzw. übergebbar ist;
- der Druck, unter dem die Kunststoffschmelze (2) an der Einlassseite (4a) der Schmelzepumpe (4) ansteht bzw. übergebbar ist, ist größer als 4 bar, 5 bar, 6 bar, 7 bar, 8 bar, 9 bar, 10 bar, 11 bar 13 bar, 15 bar 17 bar oder größer als 19 bar;
- um den Druck, unter dem die Kunststoffschmelze (2) an der Einlassseite (4a) der Schmelzepumpe (4) ansteht bzw. übergebbar ist, zu erhöhen, ist die Schmelzepumpe (4) dazu ausgebildet, ihre Pumpendrehzahl zu verringern, sodass sich die Kunststoffschmelze (2) von der Einlassseite (4a) der Schmelzepumpe (4) in Richtung der Ausstoßseite (3b) des Planetwalzenextruders (3) zurückstaut, wobei diesem Rückstau der kontinuierliche Materialfluss der weiteren Kunststoffschmelze (2) entgegenwirkt, sodass es zu einer Erhöhung des Drucks kommt; die Anlage ist **dadurch gekennzeichnet, dass**
- ein Bereich beginnend von der Befüllungsöffnung (3a) des Planetwalzenextruders (3) hin zur Einlassseite (4a) der Schmelzepumpe (4) ist frei von Luftöffnungen, sodass in der Kunststoffschmelze (2) mitgeschleppte Luft beim Druckaufbau der Kunststoffschmelze (2) aus dieser verdrängt und in Richtung der Befüllungsöffnung (3a) zurückgedrückt und erst dort aus dem Planentenwalzenextruder (3) entgast wird.

2. Anlage (1) nach Anspruch 1, **gekennzeichnet durch** die folgenden Merkmale:
- es ist eine Antriebsvorrichtung (16) zum Antreiben des Planetwalzenextruders (3) vorgesehen;
- der Planentenwalzenextruder (3) umfasst n Walzenzylinder (3₁, ..., 3ₙ), mit n ≥ 1, n ≥ 2, n ≥ 3, n ≥ 4, n ≥ 5, n ≥ 6, n ≥ 7, n ≥ 8, n ≥ 9 oder n ≥ 10 und eine verzahnte Zentralspindel (20);
- die n Walzenzylinder (3₁, ..., 3ₙ) sind entlang ihrer Längsachse benachbart zueinander angeordnet und aneinander befestigt, insbesondere miteinander verschraubt und zueinander abgedichtet;
- jeder Walzenzylinder (3₁, ..., 3ₙ) umfasst eine innenverzahnte Zylinderhülse (21) und m verzahnte Planetspindeln (22), mit, m ≥ 3, m ≥ 4, m ≥ 5, m ≥ 6, m ≥ 7, m ≥ 8, m ≥ 9, m ≥ 10, m ≥ 11, m ≥ 12, m ≥ 13, m ≥ 14, m ≥ 15, m ≥ 16, m ≥ 17, m ≥ 18, m ≥ 19 oder m ≥ 20 und ist von der verzahnten Zentralspindel (20) durchsetzt;
- die Zentralspindel (20) und die m Planetspindeln (22) sind innerhalb der Zylinderhülse (21) des jeweiligen Walzenzylinders (3₁, ..., 3ₙ) angeordnet, wobei die Planetspindeln (22) zwischen der Zentralspindel (20) und der Zylinderhülse (21) angeordnet sind;
- die Zentralspindel (20) ist durch die Antriebsvorrichtung (16) antreibbar, wobei sich die Zentralspindel (20) und die Planetspindeln (22) zum einen und die Planetspindeln (22) mit der innenverzahnten Zylinderhülse (21) zum anderen kämmen, sodass sich die m Planetspindeln (22) durch Drehen der Zentralspindel (20) auf der Zentralspindel (20) und der Zylinderhülse (21) abwälzen;
- die Befüllungsöffnung (3a) ist in dem ersten Walzenzylinder (3₁) angeordnet und die Ausstoßseite (3b) in dem n-ten Walzenzylinder (3ₙ).

3. Anlage (1) nach Anspruch 2, **gekennzeichnet durch** die folgenden Merkmale:
- es ist eine Dosieranordnung (8) vorgesehen;
- die Dosieranordnung (8) umfasst:
a) zumindest ein gravimetrisches Dosierwerk (9) für ein Polymer; und
b) eine Dosierpumpenanordnung (10) mit zumindest einer Dosierpumpe (10a, 10b) und mit zumindest einer Einspritzanordnung (11) für eine Flüssigkomponente;
- die Dosieranordnung (8) ist dazu ausgebildet, das Polymer und die Flüssigkomponente zu dosieren und:
a) direkt über die Befüllungsöffnung (3a) in den ersten Walzenzylinder (3₁) auszugeben, wo das Polymer und die Flüssigkomponente miteinander vermischbar sind; oder
b) in eine Seitenbeschickung (7) mit einer oder zwei Förderschnecke(n) zu geben, in welcher eine Vermischung des Polymers und der Flüssigkomponente stattfindet, wobei die Förderschnecke(n) dazu ausgebildet ist (sind), die Mischung über die Befüllungsöffnung (3a) in den ersten Walzenzylinder (3₁) auszugeben.

4. Anlage (1) nach Anspruch 3, **gekennzeichnet durch** das folgende Merkmal:
- die Dosieranordnung (8) ist dazu ausgebildet, das Verhältnis der dem Planetwalzenextruder (3) zugeführten Menge an Polymer und Flüssigkomponente einzustellen, wobei:
a) auf 20 bis 50 Gewichtsteile des Polymers 80 bis 50 Gewichtsteile der Flüssigkomponente hinzufügbar sind; oder
b) auf 25 bis 45 Gewichtsteile des Polymers 75 bis 55 Gewichtsteile der Flüssigkomponente hinzufügbar sind; oder
c) auf 30 bis 40 Gewichtsteile des Polymers 70 bis 60 Gewichtsteile der Flüssigkomponente hinzufügbar sind.

5. Anlage (1) nach Anspruch 3 oder 4, **gekennzeichnet durch** die folgenden Merkmale:
- es ist zumindest ein Drucksensor (30) vorgesehen, der am n-ten Walzenzylinder (3ₙ) oder zwischen dem n-ten Walzenzylinder (3ₙ) und der Einlassseite (4a) der Schmelzepumpe (4) angeordnet und dazu ausgebildet ist, einen Druck der Kunststoffschmelze (2) zu messen;
- es ist eine Steuereinrichtung (14) vorgesehen, die dazu ausgebildet ist, bei einem gemessenen Druckwert, der:
a) unterhalb eines Referenzwerts liegt:
i) die Dosieranordnung (8) bezüglich ihrer Ausgabemenge derart anzusteuern, dass diese ihre Ausgabemenge erhöht; und/oder
ii) die Antriebsvorrichtung (16) bezüglich der Drehzahl der Zentralspindel (20) derart anzusteuern, dass diese ihre Drehzahl erhöht; und/oder
iii) die Schmelzepumpe (4) bezüglich der Pumpendrehzahl derart anzusteuern, dass diese ihre Drehzahl verringert;
so dass der gemessene Druck durch den zumindest einen Drucksensor (30) den vorbestimmten Referenzwert in etwa erreicht;
und/oder
b) oberhalb eines Referenzwerts liegt:
i) die Dosieranordnung (8) bezüglich ihrer Ausgabemenge derart anzusteuern, dass diese ihre Ausgabemenge verringert; und/oder
ii) die Antriebsvorrichtung (16) bezüglich der Drehzahl der Zentralspindel (20) derart anzusteuern, dass diese ihre Drehzahl verringert; und/oder
iii) die Schmelzepumpe (4) bezüglich der Pumpendrehzahl derart anzusteuern, dass diese ihre Drehzahl erhöht;
so dass der gemessene Druck durch den zumindest einen Drucksensor den vorbestimmten Referenzwert in etwa erreicht.

6. Anlage (1) nach einem der Ansprüche 2 bis 5, **gekennzeichnet durch** das folgende Merkmal:
- die Zentralspindel (20):
a) ist einteilig aufgebaut und durchsetzt alle n Walzenzylinder (3₁, ..., 3ₙ), oder
b) umfasst mehrere einzelne Zentralspindelsegmente, die entlang ihrer Längsachse drehfest miteinander zu der Zentralspindel (20) verbunden sind.

7. Anlage (1) nach einem der Ansprüche 2 bis 6, **gekennzeichnet durch** die folgenden Merkmale:
- die Planetspindeln (22) innerhalb der meisten Walzenzylinder (3₁, ..., 3ₙ) sind ausschließlich innerhalb des jeweiligen Walzenzylinders (3₁, ..., 3ₙ) angeordnet und erstrecken sich nicht von diesem Walzenzylinder (3₁, ..., 3ₙ) in benachbarte Walzenzylinder (3₁, ..., 3ₙ) hinein; und/oder
- die ersten beiden benachbarten Walzenzylinder (3₁, 3₂) umfassen durchgehende Planetspindeln (22), die sowohl im ersten als auch im zweiten Walzenzylinder (3₁, 3₂) angeordnet sind.

8. Anlage (1) nach einem der Ansprüche 2 bis 7, **gekennzeichnet durch** die folgenden Merkmale:
- zwischen den ersten beiden benachbarten Walzenzylindern (3₁, 3₂) ist ein verzahnter Zwischenring (25) eingesetzt;
- der verzahnte Zwischenring (25) bildet die Innenverzahnung der Zylinderhülse (3₁, ..., 3ₙ) ab.

9. Anlage (1) nach einem der Ansprüche 2 bis 8, **gekennzeichnet durch** die folgenden Merkmale:
- zumindest ab dem zweiten Walzenzylinder (3₂, ..., 3ₙ) ist jeweils zwischen zwei benachbarten Walzenzylindern (3₂, ..., 3ₙ) ein Dispergierring (26) angeordnet;
- der Dispergierring (26) am Übergang vom zweiten Walzenzylinder (3i) zum dritten Walzenzylinder (3₃) hat einen größeren oder kleineren Ringspalt als ein Dispergierring (26) am Übergang vom n-1-ten Walzenzylinder (3ₙ₋₁) zum n-ten Walzenzylinder (3ₙ); oder
der Dispergierring (26) am Übergang vom zweiten Walzenzylinder (3i) zum dritten Walzenzylinder (3₃) hat einen gleich großen Ringspalt wie ein Dispergierring (26) am Übergang vom n-1-ten Walzenzylinder (3ₙ₋₁) zum n-ten Walzenzylinder (3ₙ).

10. Anlage (1) nach einem der Ansprüche 2 bis 9, **gekennzeichnet durch** die folgenden Merkmale:
- die Verzahnung der Zentralspindel (20) ist beim Übergang von einem Walzenzylinder (3₁, ..., 3ₙ) zu einem benachbarten Walzenzylinder (3₁, ..., 3ₙ) unterbrochen; und/oder
- die Verzahnung der Planetspindeln (22) in zumindest einem, mehreren oder allen Walzenzylindern (3₁, ..., 3ₙ) ist mehrfach unterbrochen, wodurch die Querdurchmischung in dem jeweiligen Walzenzylinder (3₁, ..., 3ₙ) zunimmt.

11. Anlage (1) nach einem der Ansprüche 2 bis 10, **gekennzeichnet durch** die folgenden Merkmale:
a) die Zentralspindel (20) ist vollständig oder entlang ihrer überwiegenden Länge von zumindest einem Fluidkanal (40a) durchsetzt;
es sind eine Pumpenanordnung (41) und eine Temperieranordnung (42) vorgesehen und dazu ausgebildet, um ein Fluid auf eine bestimmte Temperatur zu Temperieren und durch den zumindest Fluidkanal (40a) zu leiten, um dadurch die Kunststoffschmelze (2) auf eine bestimmte Temperatur zu temperieren;
und/oder
b) die Walzenzylinder (3₁, ..., 3ₙ) umfassen zumindest einen Temperierungskanal (45a);
es sind eine Pumpenanordnung (50) und eine Temperieranordnung (51) vorgesehen und dazu ausgebildet, um ein Fluid auf eine bestimmte Temperatur zu temperieren und durch den zumindest einen Temperierungskanal (45a) des jeweiligen Walzenzylinders (3₁, ..., 3ₙ) zu leiten, um dadurch die Kunststoffschmelze (2) auf eine bestimmte Temperatur zu temperieren;
die zumindest einen Temperierungskanäle (45a) der Walzenzylinder (3₁, ..., 3ₙ) sind voneinander getrennt und unterschiedlich temperierbar, wobei die Temperatur eines Fluids im ersten Walzenzylinder (3₁) höher oder niedriger ist als die Temperatur eines Fluids im n-ten Walzenzylinder (3ₙ).

12. Verwendung der Anlage (1) zur Herstellung einer Kunststoffschmelze (2) für eine poröse Folie, in Form einer Membranfolie, wobei die Anlage (1) nach einem der vorherigen Merkmale aufgebaut ist und wobei der Befüllungsöffnung (3a) ein Polymer und eine Flüssigkomponente zugeführt werden.

## Claims

1. Assembly (1) for producing a plastic melt (2) for porous films in the form of membrane films having the following features:
- having a planetary roller extruder (3) for producing a free-flowing plastic melt (2) from thermoplastics;
- the planetary roller extruder (3) has a filling opening (3a) and an output side (3b) for outputting the plastic melt (2);
further specified by the following features:
- a melt pump (4) is provided;
- the output side (3b) of the planetary roller extruder (3) is connected to a downstream input side (4a) of the melt pump (4) for onward transportation of the plastic melt (2);
- the connection is designed:
a) as a pressure channel; or
b) as a pressure conduit (6)
that is shielded in relation to the surrounding atmosphere;
- the planetary roller extruder (3) and the melt pump (4) are designed and/or can be driven such that the plastic melt (2) is applied or can be transferred to the melt pump (4) under pressure on the input side (4a);
- the pressure under which the plastic melt (2) is applied or can be transferred to the input side (4a) of the melt pump (4) is greater than 4 bar, 5 bar, 6 bar, 7 bar, 8 bar, 9 bar, 10 bar, 11 bar, 13 bar, 15 bar, 17 bar or greater than 19 bar;
- to increase the pressure under which the plastic melt (2) is applied or can be transferred to the input side (4a) of the melt pump (4), the melt pump (4) is designed to reduce its pump rotational speed, so that the plastic melt (2) builds up from the input side (4a) of the melt pump (4) in the direction of the output side (3b) of the planetary roller extruder (3), this build-up working against the continuous material flow of the further plastic melt (2) so that it causes an increase in pressure;
the assembly is **characterised in that**
- a region beginning from the filling opening (3a) of the planetary roller extruder (3) is free from air openings up to the input side (4a) of the melt pump (4) so that air dragged into the plastic melt (2) is pushed out of said plastic melt when the pressure of the plastic melt (2) builds up, and is pushed in the direction of the filling opening (3a) and only then degassed from the planetary roller extruder (3).

2. Assembly (1) according to claim 1, **characterised by** the following features:
- a drive device (16) for driving the planetary roller extruder (3) is provided;
- the planetary roller extruder (3) comprises n roller cylinders (3₁, ..., 3ₙ), where n ≥ 1, n ≥ 2, n ≥ 3, n ≥ 4, n ≥ 5, n ≥ 6, n ≥ 7, n ≥ 8, n ≥ 9 or n ≥ 10 and a toothed central spindle (20);
- the n roller cylinders (3₁, ..., 3ₙ) are arranged next to one another along their longitudinal axes and fastened to one another, in particular screwed to one another and sealed against one another;
- each roller cylinder (3₁, ..., 3ₙ) comprises an internal-toothed cylinder sleeve (21) and m toothed planetary spindles (22), where m ≥ 3, m ≥ 4, m ≥ 5, m ≥ 6, m ≥ 7, m ≥ 8, m ≥ 9, m ≥ 10, m ≥ 11, m ≥ 12, m ≥ 13, m ≥ 14, m ≥ 15, m ≥ 16, m ≥ 17, m ≥ 18, m ≥ 19 or m ≥ 20 and is passed through by the toothed central spindle (20);
- the central spindle (20) and the m planetary spindles (22) are arranged within the cylinder sleeve (21) of the respective roller cylinder (3₁,..., 3ₙ), wherein the planetary spindles (22) are arranged between the central spindle (20) and the cylinder sleeve (21);
- the central spindle (20) can be driven by the drive device (16), wherein the central spindle (20) and the planetary spindles (22) interlock on the one hand and the planetary spindles (22) interlock with the internal-toothed cylinder sleeve (21) on the other, so that the m planetary spindles (22) roll on the central spindle (20) and the cylinder sleeve (21) via rotation of the central spindle (20),
- the filling opening (3a) is arranged in the first roller cylinder (3₁) and the output side (3b) is arranged in the nth roller cylinder (3ₙ).

3. Assembly (1) according to claim 2, **characterised by** the following features:
- a metering arrangement (8) is provided;
- the metering arrangement (8) comprises:
a) at least one gravimetric metering unit (9) for a polymer; and
b) a metering pump arrangement (10) having at least one metering pump (10a, 10b) and having at least one injecting arrangement (11) for a fluid component;
- the metering arrangement (8) is designed to meter the polymer and the fluid component and:
a) to output them directly via the filling opening (3a) into the first roller cylinder (3₁), where the polymer and the fluid component can be mixed with one another; or
b) to transfer them into a side feeder (7) having one or two feeding pipe(s), in which the polymer and the fluid component can be mixed, the feeding pipe(s) being designed to output the mixture via the filling opening (3a) into the first roller cylinder (3₁).

4. Assembly (1) according to claim 3, **characterised by** the following feature:
- the metering arrangement (8) is designed to adjust the ratio of the quantity of polymer and fluid component fed to the planetary roller extruder (3), wherein:
a) 80 to 50 parts by weight of the fluid component can be added to 20 to 50 parts by weight of the polymer; or
b) 75 to 55 parts by weight of the fluid component can be added to 25 to 45 parts by weight of the polymer; or
c) 70 to 60 parts by weight of the fluid component can be added to 30 to 40 parts by weight of the polymer.

5. Assembly (1) according to claim 3 or 4, **characterised by** the following features:
- at least one pressure sensor (30) is provided that is arranged on the nth roller cylinder (3ₙ) or between the nth roller cylinder (3ₙ) and the intake side (4a) of the melt pump (4) and is designed to measure a pressure on the plastic melt (2);
- a control device (14) is provided that is designed, in the case of a measured pressure value that
a) lies below a reference value:
i) to control the metering arrangement (8) with regard to its output quantity such that it increases its output quantity; and/or
ii) to control the drive device (16) with regard to the rotational speed of the central spindle (20) such that said central spindle increases its rotational speed; and/or
iii) to control the melt pump (4) with regard to the pump rotational speed such that it reduces its rotational speed;
so that via the at least one pressure sensor (30), the measured pressure reaches approximately the pre-determined reference value;
and/or
b) lies above a reference value:
i) to control the metering arrangement (8) with regard to its output quantity such that it reduces its output quantity; and/or
ii) to control the drive device (16) with regard to the rotational speed of the central spindle (20) such that said central spindle reduces its rotational speed; and/or
iii) to control the melt pump (4) with regard to the pump rotational speed such that it increases its rotational speed;
so that via the at least one pressure sensor, the measured pressure reaches approximately the pre-determined reference value.

6. Assembly (1) according to one of claims 2 to 5, **characterised by** the following feature:
- the central spindle (20):
a) is constructed as one part and passes through all n roller cylinders (3₁, ..., 3ₙ); or
b) comprises several individual central spindle segments that are connected to each other along their longitudinal axis in a manner fixed against rotation to form the central spindle (20).

7. Assembly (1) according to one of claims 2 to 6, **characterised by** the following features:
- the planetary spindles (22) within most of the roller cylinders (3₁, ..., 3ₙ) are exclusively arranged inside the respective roller cylinder (3₁, ..., 3ₙ) and do not extend from this roller cylinder (3₁, ..., 3ₙ) into neighbouring roller cylinders (3₁,..., 3ₙ); and/or
- the first two neighbouring roller cylinders (3₁, 3₂) comprise planetary spindles (22) passing through, which are arranged both in the first and in the second roller cylinder (3₁, 3₂).

8. Assembly (1) according to one of claims 2 to 7, **characterised by** the following features:
- a toothed spacer ring (25) is positioned between the first two neighbouring roller cylinders (3₁, 3₂);
- the toothed spacer ring (25) forms the internal toothing of the cylinder sleeve (3₁, ..., 3n).

9. Assembly (1) according to one of claims 2 to 8, **characterised by** the following features:
- a respective dispersion ring (26) is arranged between two neighbouring roller cylinders (3₁, ..., 3ₙ), at least from the second roller cylinder (3₂,..., 3ₙ) onwards;
- the dispersion ring (26) on the transition from the second roller cylinder (3z) to the third roller cylinder (3₃) has a larger or smaller ring gap than a dispersion ring (26) on the transition from the n-1th roller cylinder (3ₙ₋₁) to the nth roller cylinder (3ₙ); or
the dispersion ring (26) on the transition from the second roller cylinder (3z) to the third roller cylinder (3₃) has an equally large ring gap as a dispersion ring (26) on the transition from the n-1th roller cylinder (3ₙ₋₁) to the nth roller cylinder (3ₙ).

10. Assembly (1) according to one of claims 1 to 9, **characterised by** the following features:
- the toothing of the central spindle (20) is interrupted in the transition from the first roller cylinder (3₁, ..., 3ₙ) to a neighbouring roller cylinder (3₁, ..., 3ₙ); and/or
- the toothing of the planetary spindles (22) in at least one, several or all roller cylinders (3₁, ..., 3ₙ) is interrupted several times, whereby the cross-mixing in the respective roller cylinder (3₁, ..., 3ₙ) increases.

11. Assembly (1) according to one of claims 2 to 10, **characterised by** the following features:
a) the central spindle (20) is passed through completely or along the majority of its length by at least one fluid channel (40a);
a pump arrangement (41) and a tempering arrangement (42) are provided and designed to temper a fluid at a particular temperature and to guide said fluid through the at least one fluid channel (40a) to thus temper the plastic melt (2) to a particular temperature;
and/or
b) the roller cylinders (3₁, ..., 3ₙ) comprise at least one tempering channel (45a);
a pump arrangement (50) and a tempering arrangement (51) are provided and designed to temper a fluid to a particular temperature and to guide said fluid through the at least one tempering channel (45a) of the respective roller cylinder (3₁, ..., 3ₙ) in order thus to temper the plastic melt (2) to a particular temperature;
the at least one tempering channels (45a) of the roller cylinders (3₁, ..., 3ₙ) are separated from one another and can be tempered differently, the temperature of a fluid in the first roller cylinder (3₁) being higher or lower than a temperature of a fluid in the nth roller cylinder (3ₙ).

12. Use of the assembly (1) for producing a plastic melt (2) for a porous film, in the form of a membrane film, the assembly (1) being constructed according to one of the preceding features and wherein a polymer and a fluid component are fed to the filling opening (3a).

## Revendications

1. Installation (1) de production de matière plastique fondue (2) pour films poreux sous la forme de films membranaires, présentant les caractéristiques suivantes :
- elle présente une extrudeuse planétaire (3) destinée à produire une matière plastique fondue (2) coulable à base de plastiques thermoplastiques ;
- l'extrudeuse planétaire (3) présente une ouverture de remplissage (3a) et un côté décharge (3b) pour l'évacuation de la matière plastique fondue (2) ;
présentant en outre les spécificités suivantes :
- il est prévu une pompe à matière fondue (4) ;
- le côté décharge (3b) de l'extrudeuse planétaire (3) est en communication avec, en aval de celle-ci, un côté entrée (4a) de la pompe à matière fondue (4) permettant le refoulement ultérieur de la matière plastique fondue (2) ;
- la communication s'effectue par le biais de
a) une conduite sous pression ou
b) une ligne sous pression (6)
isolée de l'atmosphère ambiante ; et
- l'extrudeuse planétaire (3) et la pompe à matière fondue (4) sont conçues et/ou exploitables de telle façon que la matière plastique fondue (2) soit présente sous pression au niveau du côté entrée (4a) de la pompe à matière fondue (4) ou qu'elle puisse y être apportée ;
- la pression à laquelle la matière plastique fondue (2) est présente au niveau du côté entrée (4a) de la pompe à matière fondue (4) ou à laquelle elle peut y être apportée est supérieure à 4 bar, 5 bar, 6 bar, 7 bar, 8 bar, 9 bar, 10 bar, 11 bar, 13 bar, 15 bar, 17 bar ou supérieure à 19 bar ;
- pour élever la pression à laquelle la matière plastique fondue (2) est présente au niveau du côté entrée (4a) de la pompe à matière fondue (4) ou à laquelle elle peut y être apportée, la pompe à matière fondue (4) est conçue pour subir une réduction de régime à la suite de laquelle la matière plastique fondue (2) crée une obstruction depuis le côté entrée (4a) de la pompe à matière fondue (4) en direction du côté décharge (3b) de l'extrudeuse planétaire (3), cette obstruction contrariant l'écoulement continu ultérieur de matière plastique fondue (2) et provoquant ainsi une élévation de la pression ;
l'installation est **caractérisée en ce que**
- une zone commençant à l'ouverture de remplissage (3a) de l'extrudeuse planétaire (3) jusqu'au côté entrée (4a) de la pompe à matière fondue (4) est exempte de quelque ouverture d'aération que ce soit, de telle façon que l'air entraîné dans la matière plastique fondue (2) soit éliminé de celle-ci lors de la mise sous pression de la matière plastique fondue (2) et refoulé en direction de l'ouverture de remplissage (3a), où il est alors évacué de l'extrudeuse planétaire (3).

2. Installation (1) selon la revendication 1, **caractérisée par** les particularités suivantes :
- il est prévu un dispositif d'entraînement (16) permettant d'entraîner l'extrudeuse planétaire (3) ;
- l'extrudeuse planétaire (3) comprend n cylindres (3₁, ..., 3ₙ), où n ≥ 1, n ≥ 2, n ≥ 3, n ≥ 4, n ≥ 5, n ≥ 6, n ≥ 7, n ≥ 8, n ≥ 9 ou n ≥ 10, et une broche centrale (20) dentée ;
- les n cylindres (3₁, ..., 3ₙ) sont adjacents les uns aux autres selon leur axe longitudinal et sont fixés les uns aux autres, notamment vissés entre eux et étanchés les uns des autres ;
- chaque cylindre (3₁, ..., 3) comprend un fourreau (21) à denture interne et m broches planétaires (22) dentées, où m ≥ 3, m ≥ 4, m ≥ 5, m ≥ 6, m ≥ 7, m ≥ 8, m ≥ 9, m ≥ 10, m ≥ 11, m ≥ 12, m ≥ 13, m ≥ 14, m ≥ 15, m ≥ 16, m ≥ 17, m ≥ 18, m ≥ 19 ou m > 20, et est traversé par la broche centrale (20) dentée ;
- la broche centrale (20) et les m broches planétaires (22) sont agencées à l'intérieur du fourreau (21) du cylindre (3₁, ..., 3ₙ) respectif, lesdites broches planétaires (22) sont agencées entre la broche centrale (20) et le fourreau (21) ;
- la broche centrale (20) peut être entraînée par le dispositif d'entraînement (16), ladite broche centrale (20) s'engrenant dans lesdites broches planétaires (22) d'une part et lesdites broches planétaires (22) s'engrenant dans le fourreau (21) à denture interne d'autre part, si bien que les m broches planétaires (22) roulent sur la broche centrale (20) et le fourreau (21) sous l'effet de la rotation de la broche centrale (20) ;
- l'ouverture de remplissage (3a) est située dans le premier cylindre (3₁), et le côté décharge (3b) dans le n-ième cylindre (3ₙ).

3. Installation (1) selon la revendication 2, **caractérisée par** les particularités suivantes :
- il est prévu un dispositif de dosage (8) ;
- le dispositif de dosage (8) comprend :
a) au moins un mécanisme de dosage gravimétrique (9) de polymère, et
b) un dispositif à pompe de dosage (10) comportant au moins une pompe de dosage (10a, 10b) et au moins un dispositif d'injection (11) de composant liquide ;
- le dispositif de dosage (8) est conçu pour doser le polymère et le composant liquide, et :
a) pour les apporter directement, par le biais de l'ouverture de remplissage (3a), dans le premier cylindre (3₁), où le polymère et le composant liquide peuvent être mélangés l'un à l'autre, ou
b) pour les introduire dans une alimentation latérale (7) dotée d'une ou de deux vis d'amenée, où a lieu un mélange du polymère et du composant liquide, la ou les vis d'amenée étant conçues pour apporter le mélange, par le biais de l'ouverture de remplissage (3a), dans le premier cylindre (3₁).

4. Installation (1) selon la revendication 3, **caractérisée par** la particularité suivante :
- le dispositif de dosage (8) est conçu pour ajuster le rapport entre la quantité de polymère et de composant liquide apportée à l'extrudeuse planétaire (3), étant entendu que :
a) 80 à 50 parties en poids de composant liquide peuvent être ajoutées à 20 à 50 parties en poids de polymère, ou
b) 75 à 55 parties en poids de composant liquide peuvent être ajoutées à 25 à 45 parties en poids de polymère, ou
c) 70 à 60 parties en poids de composant liquide peuvent être ajoutées à 30 à 40 parties en poids de polymère.

5. Installation (1) selon la revendication 3 ou 4, **caractérisée par** les particularités suivantes :
- il est prévu au moins un capteur de pression (30) agencé au niveau du n-ième cylindre (3n) ou entre le n-ième cylindre (3n) et le côté entrée (4a) de la pompe à matière fondue (4) et conçu pour mesurer la pression de la matière plastique fondue (2) ;
- il est prévu un dispositif de commande (14) qui est conçu
a) lorsque la valeur de la pression mesurée est inférieure à une valeur de référence :
i) pour commander le dispositif de dosage (8) eu égard à son débit de production de façon à augmenter ce débit de production, et/ou
ii) pour commander le dispositif d'entraînement (16) eu égard au régime de la broche centrale (20) de façon à augmenter ce régime, et/ou
iii) pour commander la pompe à matière fondue (4) eu égard à son régime de façon à réduire ce régime,
de telle façon que la pression mesurée par l'au moins un capteur de pression (30) atteigne pratiquement la valeur de référence prédéterminée ;
et/ou
b) lorsque la valeur de la pression mesurée est supérieure à une valeur de référence :
i) pour commander le dispositif de dosage (8) eu égard à son débit de production de façon à réduire ce débit de production, et/ou
ii) pour commander le dispositif d'entraînement (16) eu égard au régime de la broche centrale (20) de façon à réduire ce régime, et/ou
iii) pour commander la pompe à matière fondue (4) eu égard à son régime de façon à augmenter ce régime,
de telle façon que la pression mesurée par l'au moins un capteur de pression atteigne pratiquement la valeur de référence prédéterminée.

6. Installation (1) selon l'une des revendications 2 à 5, **caractérisée par** la particularité suivante :
- la broche centrale (20) :
a) est conçue d'un seul tenant et traverse la totalité des n cylindres (3₁, ..., 3ₙ), ou
b) comprend plusieurs segments de broche centrale individuels reliés solidaires en rotation sur leur axe longitudinal pour former la broche centrale (20).

7. Installation (1) selon l'une des revendications 2 à 6, **caractérisée par** les particularités suivantes :
- les broches planétaires (22) situées à l'intérieur de la plupart des cylindres (3₁, ..., 3ₙ) sont agencées exclusivement à l'intérieur de leur cylindre (3₁, ..., 3ₙ) respectif et ne s'étendent pas dans des cylindres (3₁, ..., 3ₙ) voisins à partir de ce cylindre (3₁, ..., 3ₙ) ; et/ou
- les deux premiers cylindres voisins (3₁, 3₂) comprennent des broches planétaires (22) continues agencées aussi bien dans le premier que dans le deuxième cylindre (3₁, 3₂).

8. Installation (1) selon l'une des revendications 2 à 7, **caractérisée par** les particularités suivantes :
- un anneau intercalaire (25) denté est inséré entre les deux premiers cylindres voisins (3₁, 3₂) ;
- l'anneau intercalaire (25) denté reproduit la denture interne du fourreau (3₁, ..., 3ₙ).

9. Installation (1) selon l'une des revendications 2 à 8, **caractérisée par** les particularités suivantes :
- un anneau de dispersion (26) est agencé, au moins à partir du deuxième cylindre (3₂, ..., 3ₙ), entre deux cylindres (3₂, ..., 3ₙ) voisins respectifs ;
- l'anneau de dispersion (26) situé à la transition entre le deuxième cylindre (3₂) et le troisième cylindre (3₃) présente un interstice annulaire supérieur ou inférieur à celui d'un anneau de dispersion (26) situé à la transition entre le n-1-ième cylindre (3ₙ₋₁) et le n-ième cylindre (3ₙ) ; ou
l'anneau de dispersion (26) situé à la transition entre le deuxième cylindre (3₂) et le troisième cylindre (3₃) présente un interstice annulaire de la même taille qu'un anneau de dispersion (26) situé à la transition entre le n-1-ième cylindre (3ₙ₋₁) et le n-ième cylindre (3n).

10. Installation (1) selon l'une des revendications 2 à 9, **caractérisée par** les particularités suivantes :
- la denture de la broche centrale (20) est interrompue, lors de la transition d'un cylindre (3₁, ..., 3ₙ) à un cylindre (3₁, ..., 3ₙ) voisin ; et/ou
- la denture des broches planétaires (22) est interrompue plusieurs fois dans au moins un, plusieurs, voire tous les cylindres (3₁, ..., 3ₙ), ce qui accroît le mélange transversal dans le cylindre (3₁, ..., 3ₙ) en question.

11. Installation (1) selon l'une des revendications 2 à 10, **caractérisée par** les particularités suivantes :
a) la broche centrale (20) est traversée totalement, ou sur sa longueur prédominante, par au moins un canal de fluide (40a) ;
il est prévu un dispositif à pompe (41) et un régulateur de température (42) conçus pour régler un fluide à une certaine température et pour le faire passer par l'au moins un canal de fluide (40a) afin de régler la matière plastique fondue (2) à une certaine température ;
et/ou
b) les cylindres (3₁, ..., 3ₙ) comprennent au moins un canal de réglage de température (45a) ;
il est prévu un dispositif à pompe (50) et un régulateur de température (51) conçus pour régler un fluide à une certaine température et pour le faire passer par l'au moins un canal de réglage de température (45a) du cylindre (3₁, ..., 3ₙ) respectif, afin de régler la matière plastique fondue (2) à une certaine température ;
les au moins un canaux de réglage de température (45a) des cylindres (3₁, ..., 3ₙ) sont séparés les uns des autres et indépendamment réglables en température, la température d'un fluide présent dans le premier cylindre (3₁) étant supérieure ou inférieure à la température d'un fluide présent dans le n-ième cylindre (3ₙ).

12. Utilisation de l'installation (1) de production de matière plastique fondue (2) pour film poreux, sous la forme d'un film membranaire, ladite installation (1) étant élaborée selon l'une des particularités précédentes et un polymère et un composant liquide étant apportés à ladite ouverture de remplissage (3a).
